# EUROPEAN PATENT APPLICATION

(11) **EP 4 848 601 A1**
(43) Date of publication of application: **02.12.2026**
(21) Application number: 25914932.6
(22) Date of filing: 13.11.2025
(51) Int. Cl.: H04B 5/40

(54) **METHOD FOR SWITCHING NEAR FIELD COMMUNICATION EMULATED CARDS, AND RELATED APPARATUS**

(30) Priority: 03.01.2025 CN 202510014325
(71) Applicant: HUAWEI TECHNOLOGIES CO., LTD., Shenzhen, Guangdong 518129 (CN)
(72) Inventor: LI, Xiaolong, Shenzhen, Guangdong 518129 (CN); YANG, Zhenhao, Shenzhen, Guangdong 518129 (CN); ZHU, Yuhong, Shenzhen, Guangdong 518129 (CN)
(74) Representative: Gill Jennings & Every LLP
(86) International application number: PCT/CN2025/134814
(87) International publication number: WO 2026/144579

(57) **Abstract**

This application provides a near field communication emulation card switching method and a related apparatus. An electronic device activates a first NFC emulation card. The electronic device is powered off. After entering a radio frequency field of an NFC card reading device, the electronic device switches to and activates a second NFC emulation card when a specified switching condition is met. In this way, a user can switch the NFC emulation card activated by the electronic device, thereby increasing an NFC card swiping speed and improving NFC card swiping efficiency. In addition, after the electronic device is powered off, the user can also switch to a to-be-activated NFC emulation card. This is applicable to more card swiping scenarios.

## Description

This application claims priority to Chinese Patent Application No. 202510014325.3, filed with the China National Intellectual Property Administration on January 3, 2025 and entitled "NEAR FIELD COMMUNICATION EMULATION CARD SWITCHING METHOD AND RELATED APPARATUS", which is incorporated herein by reference in its entirety.

### TECHNICAL FIELD

This application relates to the field of wireless communication technologies, and in particular, to a near field communication emulation card switching method and a related apparatus.

### BACKGROUND

With development of wireless communication technologies, near field communication (near field communication, NFC) technologies are widely applied. The NFC technology is evolved by integrating a non-contact radio frequency identification (radio frequency identification, RFID) technology and an interconnection and interworking technology. In the NFC technology, an NFC apparatus having an NFC function may operate in three modes when communicating by using the NFC technology: a proximity coupling device (proximity coupling device, PCD) mode (also referred to as a card reader mode), a proximity integrated circuit card (proximity integrated circuit card, PICC) mode (also referred to as a card emulation mode), and a point to point (point to point, P2P) mode.

Currently, some electronic devices (for example, a mobile phone, a tablet, and a wearable device) having an NFC function may support both the PICC mode and the PCD mode. A user may activate one or more NFC emulation cards in the electronic device. When the electronic device is in the PICC mode, the electronic device may be emulated, based on data of the NFC emulation card, into a PICC that complies with an NFC-related standard, and exchanges data with an NFC apparatus in the PCD mode. When a plurality of NFC emulation cards are activated on the electronic device, if the electronic device is close to an NFC card reading device, the electronic device can only use a default NFC emulation card to exchange data with the NFC card reading device, to attempt to execute an NFC service. However, if the NFC service cannot be executed with the NFC card reading device via the default NFC emulation card, the NFC service fails to be executed. For example, an access card and a bank card may be activated on the electronic device, but the default NFC emulation card on the electronic device is a bank card. When the user places the electronic device close to an NFC card reading device of a gate, the electronic device cannot open a door. The user needs to adjust the default NFC emulation card on the electronic device to the access card, and then places the electronic device close to the NFC card reading device of the gate again, to open the gate. It can be learned that a card swiping operation step of the electronic device is complex, and efficiency of executing the NFC service by the electronic device is low.

### SUMMARY

This application provides a near field communication emulation card switching method and a related apparatus, to increase an NFC card swiping speed and improve NFC card swiping efficiency.

According to a first aspect, this application provides a near field communication NFC emulation card switching method, applied to an electronic device. The method includes: activating a first NFC emulation card; powering off the electronic device; after entering a radio frequency field of an NFC card reading device, executing a card swiping service of the first NFC emulation card with the NFC card reading device; switching to and activating a second NFC emulation card when a specified switching condition is met; and executing a card swiping service of the second NFC emulation card with the NFC card reading device. In this way, the electronic device can activate the first NFC emulation card, and can switch to the to-be-activated NFC emulation card after the specified switching condition is met, so that a user can replace different NFC emulation cards. Even if the first NFC emulation card does not match the NFC card reading device, as long as the electronic device activates an NFC emulation card that matches the NFC card reading device, card swiping can be successfully performed on the NFC card reading device. This increases an NFC card swiping speed and improves NFC card swiping efficiency. After the electronic device is powered off, the user may also switch, by using the NFC emulation card switching method provided in this embodiment of this application, the NFC emulation card activated by the electronic device. After the electronic device is powered off due to low power, a remaining battery level of the electronic device may also support NFC emulation card swiping. When the specified switching condition is met, the electronic device switches to the to-be-activated NFC emulation card, so that, in an emergency, the user can also trigger different NFC card reading devices to execute a card swiping service. This is applicable to more card swiping scenarios.

In a possible implementation, switching to and activating the second NFC emulation card specifically include: switching to and activating the second NFC emulation card based on a first card swiping set, where the first card swiping set includes the second NFC emulation card. In this way, the electronic device determines, based on the first card swiping set, NFC emulation cards to which the electronic device is about to switch, so that the electronic device regularly switches to the NFC emulation cards, and it is convenient for the user to use. For example, the first NFC emulation card is a default NFC emulation card, and after performing card swiping based on the default NFC emulation card, the electronic device may perform card swiping based on the NFC emulation card in the first card swiping set.

In some examples, the first NFC emulation card is an access card, and the second NFC emulation card is a vehicle key. In this way, when setting the access card as the default NFC emulation card, the electronic device may also trigger, after switching to and activating the second NFC emulation card, a vehicle corresponding to the vehicle key.

In a possible implementation, the first card swiping set further includes the first NFC emulation card. In this way, the electronic device determines a to-be-activated NFC emulation card based on the first card swiping set, so that the electronic device activates an appropriate NFC emulation card.

In some examples, a card swiping sequence is set by the user. In this way, a card swiping sequence, set by the user, of the NFC emulation card set better matches a card use habit of the user.

In some examples, the card swiping sequence is determined based on a card swiping frequency, and an NFC emulation card with a higher card swiping frequency has a higher card swiping rank. In this way, the electronic device can preferentially activate an NFC emulation card with a higher card swiping frequency, thereby increasing a probability of successful card swiping of the electronic device and shortening a card switching time.

In a possible implementation, the method further includes: receiving the input first card swiping set before the electronic device is powered off. In this way, the user can set the first card swiping set based on a use habit of the user.

In a possible implementation, there is a card swiping sequence between the first NFC emulation card and the second NFC emulation card in the first card swiping set. In this way, the user can switch to and activate different NFC emulation cards in the card swiping sequence. It is more convenient to use.

In a possible implementation, switching to and activating the second NFC emulation card specifically include: switching to and activating the second NFC emulation card in the card swiping sequence.

In a possible implementation, the specified switching condition includes receiving first input for a first button. In this way, the user can trigger, via the first button, the electronic device to switch to a to-be-activated NFC emulation card, and can also switch the NFC emulation card when it is inconvenient to gaze at a display (for example, the electronic device is powered off), which is more convenient.

In a possible implementation, the first button is a power button. In this way, the power button is connected to a power supply. After the electronic device is powered off, the power supply may supply power to the power button, so that the electronic device does not need to add an additional circuit, thereby reducing overheads for receiving the first input.

In a possible implementation, the specified switching condition includes detecting that the electronic device leaves the radio frequency field of the NFC card reading device and then re-enters the radio frequency field of the NFC card reading device. In this way, the user can switch the NFC emulation card by moving the electronic device.

In a possible implementation, the specified switching condition includes: after the card swiping service of the first NFC emulation card fails to be executed with the NFC card reading device, detecting that the electronic device leaves the radio frequency field of the NFC card reading device and then re-enters the radio frequency field of the NFC card reading device. In this way, when the electronic device successfully performs card swiping, the electronic device does not need to switch the NFC emulation card, and the electronic device switches the NFC emulation card only when card swiping fails. This can save power consumed when the electronic device still switches to and activates the NFC emulation card after the electronic device successfully performs card swiping.

In some examples, after executing the card swiping service of the second NFC emulation card with the NFC card reading device, the method further includes: switching to and activating a third NFC emulation card after detecting that the electronic device leaves the radio frequency field of the NFC card reading device and then re-enters the radio frequency field of the NFC card reading device. In this way, the electronic device can implement switching between a plurality of NFC emulation cards.

In some examples, after the card swiping service of the second NFC emulation card fails to be executed with the NFC card reading device, the method further includes: switching to and activating a third NFC emulation card after detecting that the electronic device leaves the radio frequency field of the NFC card reading device and then re-enters the radio frequency field of the NFC card reading device.

In a possible implementation, detecting that the electronic device leaves the radio frequency field of the NFC card reading device and then re-enters the radio frequency field of the NFC card reading device specifically includes: detecting that field strength of the radio frequency field of the NFC card reading device is less than first field strength, and then detecting that the field strength of the radio frequency field of the NFC card reading device is greater than second field strength. In this way, the electronic device can determine, based on the field strength of the radio frequency field of the NFC card reading device, whether the electronic device enters the radio frequency field of the NFC card reading device.

In a possible implementation, detecting that the electronic device leaves the radio frequency field of the NFC card reading device and then re-enters the radio frequency field of the NFC card reading device specifically includes: detecting that field strength of the radio frequency field of the NFC card reading device is less than first field strength, and then receiving a card search request sent by the NFC card reading device. In this way, after entering the radio frequency field of the NFC card reading device, the electronic device can receive the card search request sent by the NFC card reading device, and the electronic device can determine, based on the card search request, whether the electronic device enters the radio frequency field of the NFC card reading device.

In some examples, detecting that the electronic device leaves the radio frequency field of the NFC card reading device and then re-enters the radio frequency field of the NFC card reading device specifically includes: after signaling sent by the NFC card reading device fails to be received within second duration or a card swiping result sent by the NFC card reading device is received, receiving a card search request sent by the NFC card reading device.

In a possible implementation, the specified switching condition includes: detecting that a second moment arrives, where a time difference between the second moment and a first moment of entering the radio frequency field of the NFC card reading device is a first time difference. In this way, when the second moment arrives, the electronic device can automatically switch to and activate the second NFC emulation card, and a switching operation is simpler and more convenient.

In a possible implementation, after executing the card swiping service of the second NFC emulation card with the NFC card reading device, the method further includes: switching to and activating a third NFC emulation card at a third moment, where a time difference between the third moment and the second moment is the first time difference. In this way, the electronic device can switch to a to-be-activated NFC emulation card at an interval of the first time difference, to implement switching between a plurality of NFC emulation cards.

In a possible implementation, the specified switching condition includes: detecting that a second moment arrives after the card swiping service of the first NFC emulation card fails to be executed with the NFC card reading device, where a time difference between the second moment and a first moment of entering the radio frequency field of the NFC card reading device is a first time difference. In this way, the electronic device switches the NFC emulation card only when card swiping fails.

In a possible implementation, after executing the card swiping service of the second NFC emulation card with the NFC card reading device, the method further includes: if the card swiping service of the second NFC emulation card fails to be executed with the NFC card reading device, switching to and activating a third NFC emulation card at a third moment, where a time difference between the third moment and the second moment is the first time difference.

In a possible implementation, switching to and activating the second NFC emulation card when the specified switching condition is met specifically include: within first duration since the moment of entering the radio frequency field of the NFC card reading device, switching to and activating the second NFC emulation card when the specified switching condition is met. In this way, within the first duration, the electronic device switches to and activates the second NFC emulation card only when the specified switching condition is met. After the first duration, the electronic device activates the first NFC emulation card, so that when the user does not use the electronic device for a long period of time to perform card swiping, it can be determined that the currently activated NFC emulation card is the first NFC emulation card.

According to a second aspect, an embodiment of this application provides an electronic device, including a processor, an NFC module, and a storage module. The storage module activates a first NFC emulation card. The processor controls the electronic device to be powered off. After the electronic device enters a radio frequency field of an NFC card reading device, the NFC module executes a card swiping service of the first NFC emulation card with the NFC card reading device. When a specified switching condition is met, the storage module switches to and activates a second NFC emulation card. The NFC module executes a card swiping service of the second NFC emulation card with the NFC card reading device. In this way, the electronic device can switch the NFC emulation card via the NFC module and the storage module, thereby increasing an NFC card swiping speed and improving NFC card swiping efficiency. After the electronic device is powered off, the electronic device can still switch the NFC emulation card via the NFC module and the storage module, so that, in an emergency, a user can also trigger different NFC card reading devices to execute a card swiping service. This is applicable to more card swiping scenarios.

In a possible implementation, the electronic device further includes a power module. That the processor controls the electronic device to be powered off specifically includes: The processor sends a power-off instruction to the power module; and in response to the power-off instruction, the power module stops supplying power to the processor, and supplies power to the NFC module and the storage module.

In a possible implementation, that the storage module switches to and activates the second NFC emulation card specifically includes: The storage module switches to and activates the second NFC emulation card based on a first card swiping set, where the first card swiping set includes the second NFC emulation card. In this way, the storage module stores card information of the NFC emulation card, and the storage module switches to and activates different NFC emulation cards based on the first card swiping set. It is more convenient.

In a possible implementation, the first card swiping set further includes the first NFC emulation card.

In a possible implementation, the processor sends the first card swiping set to the storage module when detecting a power-off condition. In this way, the processor can send the first card swiping set to the storage module before power-off, so that the storage module determines a to-be-activated NFC emulation card based on the first card swiping set after power-off.

In some examples, after the electronic device is powered on, the processor or the storage module determines a to-be-activated NFC emulation card based on the first card swiping set.

In a possible implementation, there is a card swiping sequence between the first NFC emulation card and the second NFC emulation card in the first card swiping set.

In a possible implementation, that the storage module switches to and activates the second NFC emulation card specifically includes: The storage module switches to and activates the second NFC emulation card in the card swiping sequence.

In some examples, a card swiping sequence is set by the user. In this way, a card swiping sequence, set by the user, of the NFC emulation card set better matches a card use habit of the user.

In some examples, the card swiping sequence is determined based on a card swiping frequency, and an NFC emulation card with a higher card swiping frequency has a higher card swiping rank. In this way, the electronic device can preferentially activate an NFC emulation card with a higher card swiping frequency, thereby increasing a probability of successful card swiping of the electronic device and shortening a card switching time.

In a possible implementation, the electronic device further includes a button module. That the storage module switches to and activates the second NFC emulation card when the specified switching condition is met specifically includes: The button module receives first input for a first button; the button module sends a first card switching instruction to the storage module in response to the first input; and the storage module switches to and activates the second NFC emulation card in response to the first card switching instruction. In this way, after receiving the first input, the button module can notify the storage module to switch to and activate the second NFC emulation card.

In some examples, the first button is a power button.

In a possible implementation, that the storage module switches to and activates the second NFC emulation card when the specified switching condition is met specifically includes: The NFC module detects that the electronic device leaves the radio frequency field of the NFC card reading device and then re-enters the radio frequency field of the NFC card reading device, and sends a first card switching instruction to the storage module; and the storage module switches to and activates the second NFC emulation card in response to the first card switching instruction. In this way, the NFC module can detect whether the electronic device is in the radio frequency field of the NFC card reading device, and when detecting that the specified switching condition is met, the NFC module can trigger the storage module to switch to a to-be-activated NFC emulation card.

In a possible implementation, that the storage module switches to and activates the second NFC emulation card when the specified switching condition is met specifically includes: After failing to execute the card swiping service based on the first NFC emulation card with the NFC card reading device, the NFC module detects that the electronic device leaves the radio frequency field of the NFC card reading device and then re-enters the radio frequency field of the NFC card reading device, and sends a first card switching instruction to the storage module; and the storage module switches to and activates the second NFC emulation card in response to the first card switching instruction.

In a possible implementation, that the NFC module detects that the electronic device leaves the radio frequency field of the NFC card reading device and then re-enters the radio frequency field of the NFC card reading device specifically includes: The NFC module detects that field strength of the radio frequency field of the NFC card reading device is less than first field strength, and then detects that the field strength of the radio frequency field of the NFC card reading device is greater than second field strength.

In a possible implementation, that the NFC module detects that the electronic device leaves the radio frequency field of the NFC card reading device and then re-enters the radio frequency field of the NFC card reading device specifically includes: The NFC module detects that field strength of the radio frequency field of the NFC card reading device is less than first field strength, and then receives a card search request sent by the NFC card reading device.

In some examples, that the NFC module detects that the electronic device leaves the radio frequency field of the NFC card reading device and then re-enters the radio frequency field of the NFC card reading device specifically includes: After signaling sent by the NFC card reading device fails to be received within second duration or a card swiping result sent by the NFC card reading device is received, the NFC module receives a card search request sent by the NFC card reading device.

In a possible implementation, that the storage module switches to and activates the second NFC emulation card when the specified switching condition is met specifically includes: The storage module switches to and activates the second NFC emulation card at a second moment, where a time difference between the second moment and a first moment of entering the radio frequency field of the NFC card reading device is a first time difference. In this way, the storage module can switch to a to-be-activated NFC emulation card at an interval of the first time difference when the electronic device is in the radio frequency field of the NFC card reading device.

In a possible implementation, the storage module activates a third NFC emulation card at a third moment, where a time difference between the third moment and the second moment is the first time difference.

In a possible implementation, that the storage module switches to and activates the second NFC emulation card when the specified switching condition is met specifically includes: After failing to execute the card swiping service of the first NFC emulation card with the NFC card reading device, the NFC module sends a first card switching instruction to the storage module; and the storage module switches to and activates the second NFC emulation card at a second moment in response to the first card switching instruction, where a time difference between the second moment and a first moment of entering the radio frequency field of the NFC card reading device is a first time difference.

In a possible implementation, after failing to execute the card swiping service of the second NFC emulation card with the NFC card reading device, the NFC module sends a second card switching instruction to the storage module; and the storage module switches to and activates a third NFC emulation card at a third moment in response to the second card switching instruction, where a time difference between the third moment and the second moment is the first time difference.

In a possible implementation, before the second moment, the storage module receives the first moment sent by the NFC module. In this way, the NFC module can detect whether the electronic device is in the radio frequency field of the NFC card reading device, and the NFC module sends, to the storage module, the first moment at which the electronic device enters the NFC card reading device, so that the storage module can determine the first moment.

In a possible implementation, that the storage module activates the first NFC emulation card specifically includes: The storage module sends an access layer parameter of the first NFC emulation card to the NFC module. In this way, the storage module activates the first NFC emulation card, and sends the access layer parameter of the first NFC emulation card to the NFC module. When the electronic device enters the radio frequency field of the NFC card reading device, the NFC module may perform an access layer interaction procedure with the NFC card reading device based on the access layer parameter, so that the electronic device obtains an access layer parameter of an NFC emulation card from the storage module without entering the radio frequency field of the NFC card reading device. In this way, card swiping efficiency is higher.

In a possible implementation, the access layer parameter of the first NFC emulation card includes a unique identifier UID of the first NFC emulation card. Before executing the card swiping service of the first NFC emulation card with the NFC card reading device, the NFC module receives a select select command sent by the NFC card reading device. The NFC module sends the UID of the first NFC emulation card to the NFC card reading device after receiving the select command, where the UID is used by the NFC card reading device to execute the card swiping service of the first NFC emulation card. In this way, if the first NFC emulation card does not support an application layer protocol, after obtaining the UID of the first NFC emulation card at an access layer, the NFC card reading device can execute the card swiping service of the first NFC emulation card based on the UID.

In a possible implementation, before executing the card swiping service of the first NFC emulation card with the NFC card reading device, the NFC module receives a card data request sent by the NFC card reading device. The NFC module sends an obtaining request to the storage module after receiving the card data request. The storage module sends card information of the first NFC emulation card to the NFC module after receiving the obtaining request. The NFC module sends a card data response to the NFC card reading device, where the card data response includes the card information of the first NFC emulation card, and the card information of the first NFC emulation card is used by the NFC card reading device to execute the card swiping service of the first NFC emulation card. In this way, if the first NFC emulation card supports an application layer protocol, the NFC module can obtain the card information of the first NFC emulation card from the storage module, and send the card information of the first NFC emulation card to the NFC card reading device at an application layer, so that the NFC card reading device can execute the card swiping service of the first NFC emulation card based on the card information of the first NFC emulation card.

According to a third aspect, this application provides an electronic device, including one or more processors, one or more memories, and a transceiver. The transceiver, the one or more memories, and the one or more processors are coupled to each other. The one or more memories are configured to store a computer program. When the one or more processors execute the computer program, the NFC emulation card switching method in any one of the first aspect and the possible implementations of the first aspect is performed.

According to a fourth aspect, this application provides an NFC apparatus, including one or more processors, one or more memories, and a transceiver. The transceiver, the one or more memories, and the one or more processors are coupled to each other. The one or more memories are configured to store a computer program. When the one or more processors execute the computer program, the NFC emulation card switching method in any one of the first aspect and the possible implementations of the first aspect is performed.

The NFC apparatus may be an electronic device or an NFC tag card.

According to a fifth aspect, this application provides a computer storage medium. The computer storage medium stores a computer program. When the computer program is executed by a processor, the NFC emulation card switching method in any one of the first aspect and the possible implementations of the first aspect is implemented.

According to a sixth aspect, this application provides a computer program product, including a computer program. When the computer program is executed by a processor, the NFC emulation card switching method in any one of the first aspect and the possible implementations of the first aspect is implemented.

According to a seventh aspect, this application provides a chip system, including a processing circuit and an interface circuit. The interface circuit is configured to receive code instructions and transmit the code instructions to the processing circuit. The processing circuit is configured to run the code instructions to perform the NFC emulation card switching method in any one of the first aspect and the possible implementations of the first aspect.

For beneficial effect of any one of the second aspect to the seventh aspect and the possible implementations of the second aspect to the seventh aspect, refer to the beneficial effect of any one of the first aspect and the possible implementations of the first aspect. Details are not described herein again.

### BRIEF DESCRIPTION OF DRAWINGS

FIG. 1 is a diagram of an NFC operating principle according to an embodiment of this application;
FIG. 2 is a diagram of an architecture of an NFC system 10 according to an embodiment of this application;
FIG. 3A is a diagram of a structure of an electronic device according to an embodiment of this application;
FIG. 3B is a diagram of a structure of an NFC module 102 according to an embodiment of this application;
FIG. 4 is a diagram of an NFC protocol stack according to an embodiment of this application;
FIG. 5A to FIG. 5E are a group of diagrams of card swiping of an NFC emulation card according to an embodiment of this application;
FIG. 6 is a schematic flowchart of a near field communication emulation card switching method according to an embodiment of this application;
FIG. 7 is another schematic flowchart of a near field communication emulation card switching method according to an embodiment of this application;
FIG. 8A, FIG. 8B, and FIG. 8C are another schematic flowchart of a near field communication emulation card switching method according to an embodiment of this application;
FIG. 9 is another schematic flowchart of a near field communication emulation card switching method according to an embodiment of this application;
FIG. 10A, FIG. 10B, and FIG. 10C are another schematic flowchart of a near field communication emulation card switching method according to an embodiment of this application;
FIG. 11 is another schematic flowchart of a near field communication emulation card switching method according to an embodiment of this application;
FIG. 12A, FIG. 12B, and FIG. 12C are another schematic flowchart of a near field communication emulation card switching method according to an embodiment of this application;
FIG. 13A to FIG. 13F are diagrams of a group of interfaces for setting a first NFC card swiping set according to an embodiment of this application;
FIG. 14 is a diagram of a hardware structure of an electronic device according to an embodiment of this application;
FIG. 15 is a diagram of a structure of a communication apparatus according to an embodiment of this application;
FIG. 16 is a diagram of a structure of another communication apparatus according to an embodiment of this application;
FIG. 17 is a diagram of a structure of another communication apparatus according to an embodiment of this application; and
FIG. 18 is a diagram of a structure of another communication apparatus according to an embodiment of this application.

### DESCRIPTION OF EMBODIMENTS

The following clearly describes the technical solutions in embodiments of this application in detail with reference to accompanying drawings. In descriptions of embodiments of this application, unless otherwise specified, "/" indicates "or". For example, A/B may indicate A or B. The term "and/or" in this specification describes only an association relationship between associated objects, and indicates that three relationships may exist. For example, A and/or B may indicate the following three cases: Only A exists, both A and B exist, and only B exists. In addition, in the descriptions of embodiments of this application, "a plurality of" means two or more.

The following terms "first" and "second" are merely intended for a purpose of description, and shall not be understood as an indication or implication of relative importance or implicit indication of a quantity of indicated technical features. Therefore, a feature limited by "first" and "second" may explicitly or implicitly include one or more features. In the descriptions of embodiments of this application, unless otherwise specified, "a plurality of" means two or more.

The following describes an NFC operating principle in embodiments of this application.

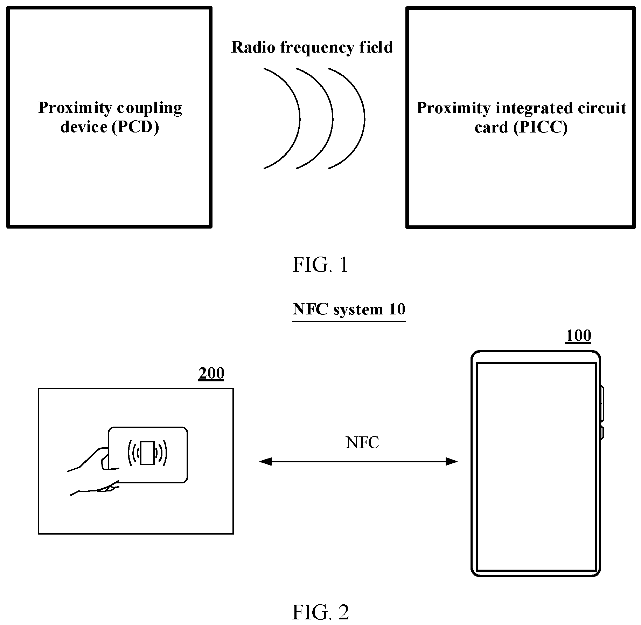

FIG. 1 is a diagram of an NFC operating principle according to an embodiment of this application.

As shown in FIG. 1, two parties that communicate with each other by using an NFC technology may include a proximity coupling device (PCD) (also referred to as an NFC card reading device) and a proximity integrated circuit card (PICC). The PCD may implement proximity-based non-contact communication with the PICC. The PCD and the PICC may allow near field communication at a specific data rate (for example, 106 kbps, 212 kbps, 424 kbps, or 848 kbps) and at a specific frequency (for example, 13.56 MHz). Communication between the PCD and the PICC may occur within a short distance between the PCD and the PICC, for example, within a range of about 2 centimeters to 4 centimeters.

The PCD may generate a high-frequency alternating current to generate a radio frequency field of a specified frequency (for example, 13.56 MHz), and send data to the PICC via the radio frequency field. After approaching the PCD, the PICC may sense the radio frequency field transmitted by the PCD. After entering the radio frequency field transmitted by the PCD, the PICC may obtain energy from the radio frequency field of the PCD through electromagnetic induction, generate power based on the obtained energy, to drive a circuit inside the PICC, and parse the data sent by the PCD via the radio frequency field, to implement data transmission from the PCD to the PICC. The PICC may further send data to the PCD by performing load modulation on the radio frequency field, to implement data transmission from the PICC to the PCD.

In embodiments of this application, the PICC may be a physical NFC tag card. Some NFC apparatuses (for example, electronic devices such as a mobile phone, a tablet and a smart watch) may also be emulated, based on data of an NFC emulation card, into a PICC that complies with an NFC-related standard, to implement functions of the PICC and perform NFC interaction with the PCD.

The following describes an NFC system provided in embodiments of this application.

FIG. 2 is a diagram of an architecture of an NFC system 10 according to an embodiment of this application.

As shown in FIG. 2, the NFC system 10 may include an electronic device 100 and an NFC card reading device 200. The electronic device 100 may be emulated, based on data information of an NFC emulation card, into a PICC that complies with an NFC-related standard, to implement functions of the PICC. The NFC card reading device 200 may serve as a PCD to perform NFC interaction with the electronic device 100 in a PICC mode.

In a possible implementation, the electronic device 100 may support both the PICC mode and a PCD mode. In the PCD mode, the electronic device 100 may serve as a PCD to transmit a radio frequency field to communicate with a PICC. In the PICC mode, the electronic device 100 may serve as a PICC to passively receive a radio frequency field transmitted by a PCD, to perform NFC interaction with the PCD by using a load modulation technology.

In this embodiment of this application, after an NFC function is enabled on the electronic device 100, the electronic device 100 may be in the PICC mode. If the electronic device 100 supports both the PCD mode and the PICC mode, after the NFC function is enabled, the electronic device 100 may switch between the PICC mode and the PCD mode in a time division manner for operating.

In this embodiment of this application, a device type of the electronic device 100 may be any one of a mobile phone, a tablet computer, a handheld computer, a desktop computer, a laptop computer, an ultra-mobile personal computer (ultra-mobile personal computer, UMPC), a netbook, a cellular phone, a personal digital assistant (personal digital assistant, PDA), a smart home device like a smart large screen or a smart speaker, a wearable device like a smart band, a smart watch, or smart glasses, an extended reality (extended reality, XR) device like an augmented reality (augmented reality, AR) device, a virtual reality (virtual reality, VR) device, or a mixed reality (mixed reality, MR) device, a vehicle-mounted device, a smart city device, or the like.

A device type of the NFC card reading device 200 may be a mobile phone, a tablet computer, a handheld computer, a desktop computer, a laptop computer, an ultra-mobile personal computer, a netbook, a cellular phone, a personal digital assistant, a smart home device like a smart large screen or a smart speaker, a wearable device like a smart band, a smart watch, or smart glasses, an extended reality device like an augmented reality device, a virtual reality device, or a mixed reality device, a vehicle, a gate, a smart door lock, a card reader, a payee terminal, a ticket purchase and/or ticket check terminal, a bank service terminal, an identity card reading device, or the like.

The following describes a diagram of a structure of an electronic device 100 provided in embodiments of this application.

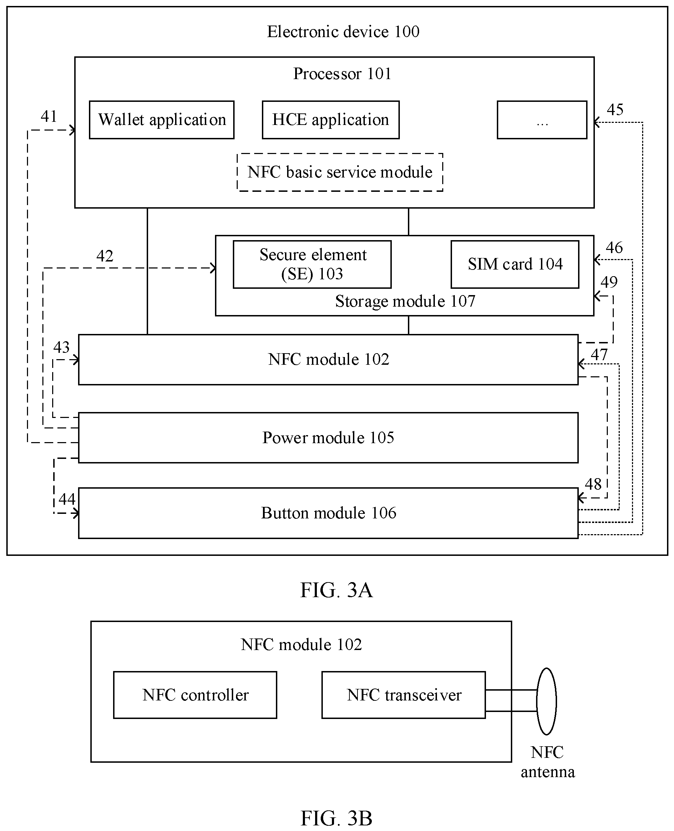

FIG. 3A is a diagram of a structure of an electronic device 100 according to an embodiment of this application.

As shown in FIG. 3A, the electronic device 100 may include a processor 101 and an NFC module 102. One or more applications (Application) may run in the processor 101. The one or more applications may include one or more of a wallet application, one or more host-based card emulation (host-based card emulation, HCE) applications, and the like. Optionally, the electronic device 100 may further include a storage module 107. The storage module 107 may include a secure element (secure element, SE) 103 and/or a subscriber identity module (subscriber identity module, SIM) card 104. The processor 101 may be connected to the NFC module 102 and the storage module 107. The NFC module 102 may further be connected to the storage module 107. A connection relationship is shown by solid lines in FIG. 3A.

As shown in FIG. 3B, the NFC module 102 may include an NFC controller and an NFC transceiver. The NFC controller may be connected to the processor 101, and the NFC controller may further be connected to the NFC transceiver and the storage module 107.

The NFC controller is mainly configured to: modulate and demodulate a non-contact communication signal, control input and output of data in the storage module 107, and interact with the processor 101. In some examples, the NFC controller may include an NFC memory, and the NFC memory may include an instruction or data that is used or cyclically used by the NFC controller. If the NFC controller needs to use the instruction or the data again, the instruction or the data may be directly invoked from the NFC memory. In this way, a waiting time of the NFC controller is shortened.

The NFC transceiver is configured to send and receive an NFC signal (for example, a 13.56 MHz radio frequency signal), and may include an NFC antenna, an electromagnetic compatibility (electromagnetic compatibility, EMC) filter circuit, a matching circuit, a receiver circuit, and the like. The NFC antenna may be a loop antenna, and is configured to implement a proximity-based non-contact communication capability of the NFC module 102.

In some examples, as shown by an arrow 49 in FIG. 3A, after entering a radio frequency field transmitted by the NFC card reading device 200, the electronic device 100 may obtain energy from the radio frequency field of the NFC card reading device 200 through electromagnetic induction through the NFC antenna, and generate power based on the obtained energy, to drive the NFC module 102 and the storage module 107, so as to implement data transmission between the NFC card reading device 200 and the electronic device 100. In this way, when power of the electronic device 100 is insufficient, the electronic device 100 may also obtain electric energy through the NFC antenna, to implement a card swiping service.

The storage module 107 may be configured to store data sent by the NFC module 102 to the NFC card reading device 200 and data received from the NFC card reading device 200. The SE 103 may include card information of a secure element-based NFC emulation card and the like. In this way, when the NFC module 102 needs to read the card information of the NFC emulation card, the card information of the NFC emulation card may be read from the SE 103. The SIM card 104 may include card information of a SIM card-based NFC emulation card and the like. In this way, when the NFC module 102 needs to read the card information of the NFC emulation card, the card information of the NFC emulation card may be read from the SIM card 104.

In some examples, the NFC memory or the storage module 107 may further store routing information. In some examples, the routing information may be controlled or managed by the NFC controller. The routing information may include a routing table, and the routing table includes a list of routing rules (a list of routing rules). Each routing rule includes an applet identifier (applet identifier, AID) and a destination (destination). The destination is a place where an applet used to implement service logic of the NFC emulation card runs. The destination may be an HCE application running in the processor 101 of the electronic device 100, or may be the SE 103 or the SIM card 104 connected to the NFC controller.

The SE 103 and the NFC module 102 may be two independent chips. Optionally, the SE 103 and the NFC module 102 may be packaged in one chip.

The electronic device 100 may activate one or more NFC emulation cards in the application based on input of a user, so that the electronic device 100 supports one or more NFC services. Service processing logic of the NFC emulation card in the electronic device 100 is specifically implemented by an applet (Applet). The applet may be stored and run in a hardware component or a software module (for example, the HCE application, the SIM card 104, or the SE 103) corresponding to the NFC emulation card.

A card emulation mode on the electronic device 100 may be classified into a hardware-based virtual card mode (virtual card mode) and a software-based HCE mode.
1. In the hardware-based virtual card mode, the electronic device 100 may provide, via the SE 103 or the SIM card 104, a running environment of an applet corresponding to the NFC emulation card, and storage and processing of service data of the NFC emulation card. The NFC module 102, as a front end of non-contact communication, forwards a command received from an external PCD to the SE 103 or the SIM card 104. Then, an applet in the SE 103 or the SIM card 104 processes the command, and the NFC module 102 sends response data to the external PCD. The user may activate one or more NFC emulation cards in the wallet application, and the wallet application may write applets and card data of the one or more NFC emulation cards into the SE 103. Alternatively, the user may activate one or more NFC emulation cards in a SIM card application; and the SIM card application may write applets and card data of the one or more NFC emulation cards into the SIM card 104 for storage.
2. In the software-based HCE mode, the HCE application running in the processor 101 may provide a running environment of an applet corresponding to the NFC emulation card, and storage and processing of service data of the NFC emulation card. After receiving a command sent by an external PCD, the NFC module 102 may send the command to the HCE application. The HCE application may process, via a cloud server or an applet running in the HCE application, the command received by the NFC module, and generate response data for the PCD. The HCE application may send the response data to the NFC module 102. The NFC module 102 may send the response data to the external PCD. The user may activate one or more NFC emulation cards in the HCE application. The HCE application may run applets of the one or more NFC emulation cards, and store card data of the NFC emulation card in a local memory of the electronic device 100 or the cloud server.

Optionally, the processor 101 may further run an NFC basic service module. The NFC basic service module may be configured to provide a common management function for one or more NFC services. The common management function may include functions such as file management, long-time card activation, security management, and service routing management.

For example, in the foregoing card emulation scenario, an NFC-related native application is installed in the electronic device 100. In addition, the user may also download and install a third-party application in the electronic device 100 through an application store. Generally, the native application may use a hardware-based virtual card solution, and the third-party application may use an HCE solution. The native application may be a wallet application, and the third-party application may be, for example, Alipay, Paypal, or a WeChat application. The foregoing example is merely used to explain this application, and shall not constitute a limitation.

In some examples, the electronic device 100 may further include a power module 105. The power module 105 may be connected to the processor 101, the NFC module 102, and the storage module 107. After the electronic device 100 is powered on, as shown by an arrow 41, an arrow 42, and an arrow 43 in FIG. 3A, the power module 105 may supply power to the processor 101, the NFC module 102, and the storage module 107. After the electronic device 100 is powered off, as shown by an arrow 42 and an arrow 43 in FIG. 3A, the power module 105 stops supplying power to the processor 101, and continues to supply power to the NFC module 102 and the storage module 107. For example, after the electronic device 100 is powered off, the power module 105 may supply power to a plurality of modules via Vbat.

In some other examples, after the electronic device 100 is powered on, the power module 105 may supply power to the processor 101, the NFC module 102, and the storage module 107. After the electronic device 100 is powered off, as shown by an arrow 48 in FIG. 3A, the electronic device 100 may drive the NFC module 102 and the storage module 107 based on power generated by the NFC antenna.

In some examples, the electronic device 100 may further include a button module 106. The button module 106 may include one or more buttons. The button of the button module 106 may be a mechanical button, or may be a touch button. The electronic device 100 may receive button input of the user, and generate button signal input related to function control. The electronic device 100 may receive specified input of the user for a specified button in one or more buttons, and switch an NFC emulation card. The specified button may be one or more of a power button, a volume button, a fingerprint touch button, and the like.

For example, when the specified button is the power button, after the electronic device 100 is powered on, the power button may be used to trigger the electronic device 100 to switch to a to-be-activated NFC emulation card, turn off a screen, or be powered off. For example, the electronic device 100 may switch to a to-be-activated NFC emulation card when receiving double-tap input of the user for the power button. The electronic device 100 may turn off the screen when receiving a single-tap input of the user for the power button. The electronic device 100 may be powered off when receiving press-and-hold input of the user for the power button.

After the electronic device 100 is powered off, the power button may be used to trigger the electronic device 100 to switch to a to-be-activated NFC emulation card or be powered on. For example, the electronic device 100 may switch to a to-be-activated NFC emulation card when receiving double-tap input or single-press input of the user for the power button. The electronic device 100 may be powered on when receiving press-and-hold input of the user for the power button.

It should be noted that, as shown by an arrow 45, after the electronic device 100 is powered on, the button module 106 may send the button signal input to the processor 101, and the processor 101 processes the button signal input. Optionally, after the electronic device 100 is powered on, the button module 106 may further send the button signal input to the NFC module 102. The NFC module 102 may switch to a to-be-activated NFC emulation card based on the button signal input, or the NFC module 102 may not respond to the button signal input.

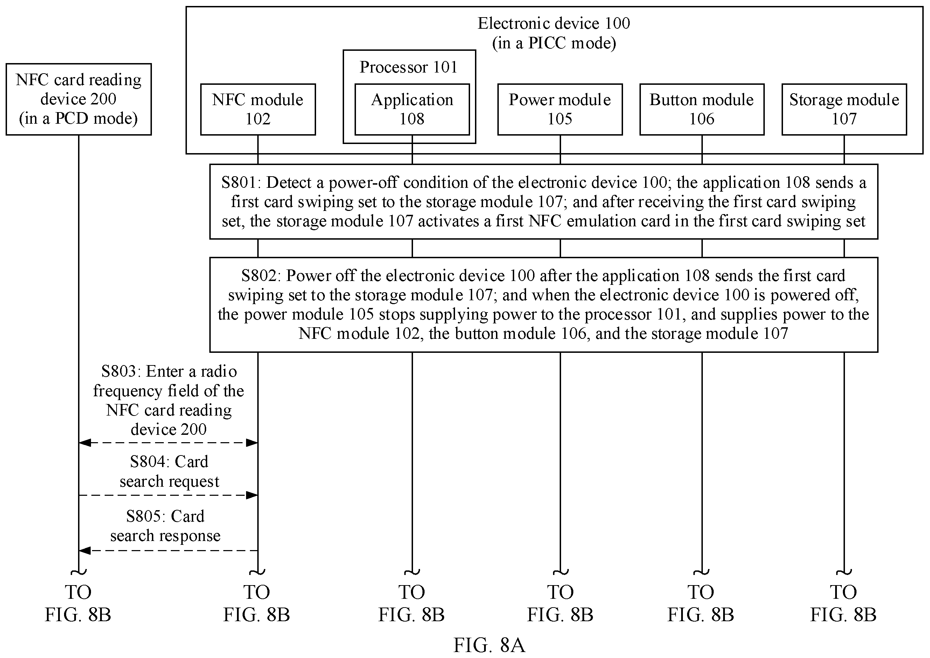

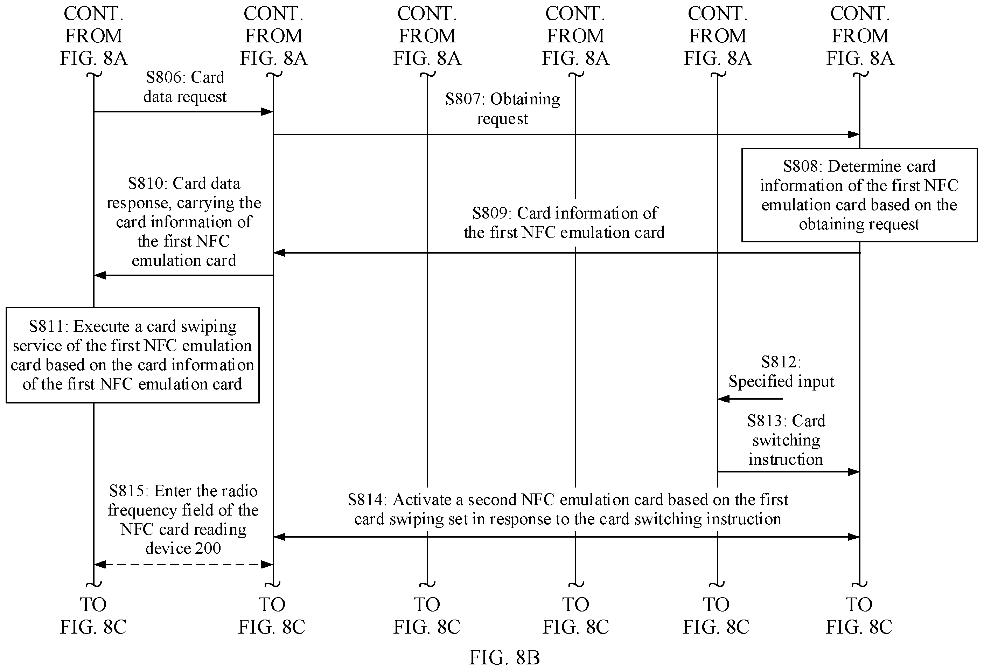

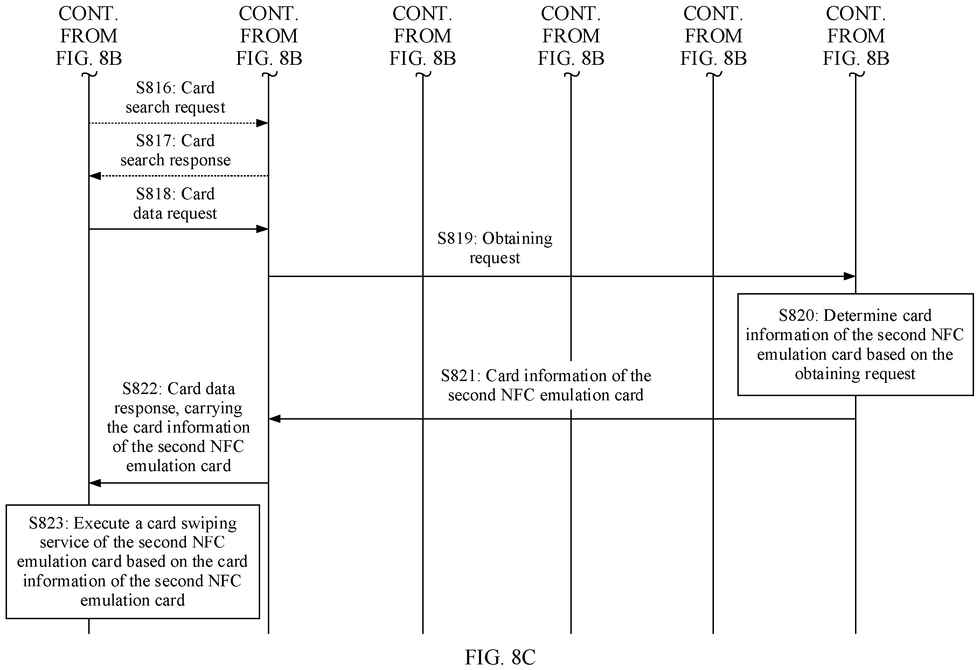

As shown by an arrow 47, after the electronic device 100 is powered off, the button module 106 may send the button signal input (for example, a card switching instruction shown in FIG. 8A, FIG. 8B, and FIG. 8C) to the NFC module 102, and the NFC module 102 processes the button signal input to switch to a to-be-activated NFC emulation card. Alternatively, as shown by an arrow 46, the button module 106 may send the button signal input to the storage module 107, and the storage module 107 processes the button signal input to switch to a to-be-activated NFC emulation card. It may be understood that, as shown by an arrow 44, the power module 105 supplies power to the button module 106. After the electronic device 100 is powered off, when receiving input for triggering power-on of the electronic device 100, the button module 106 may send a power button signal to the power module 105, and the power module 105 may supply power to the processor 101. In this way, after the electronic device 100 is powered off, the power module 105 can be triggered via the power button to supply power to the processor 101. The power button is connected to the power module 105, and can receive, after power-off, power supplied from the power module 105. Therefore, the electronic device 100 does not need to be provided with an additional circuit for supplying power to the power button, and the power button can receive specified input after power-off. Another button needs to be connected to the power module 105 via a new circuit after power-off, to supply power to the another button. The power button is used as a specified button. This can reduce overheads of circuit design.

Optionally, after the electronic device 100 is powered off, as shown by the arrow 45 and the arrow 47, the button module 106 may send the button signal input (for example, the card switching instruction shown in FIG. 8A, FIG. 8B, and FIG. 8C) to the processor 101 and the NFC module 102. The NFC module 102 processes the button signal input.

It should be further noted that, after the electronic device 100 is powered off due to insufficient power of the power module 105, and before power of the electronic device 100 is insufficient to support the electronic device 100 to be powered on, the power button is used only to trigger the electronic device 100 to switch to a to-be-activated NFC emulation card.

In some other examples, the specified button is the volume button. The volume button may include a volume button 1 and a volume button 2. After the electronic device 100 is powered on, the volume button 1 and the volume button 2 may be used to adjust volume at which the electronic device 100 plays an audio. After the electronic device 100 is powered off, the volume button 1 and the volume button 2 may be used to switch to and activate an NFC emulation card. The volume button 1 may be used to trigger the electronic device 100 to switch to and activate a previous NFC emulation card, and the volume button 2 may be used to trigger the electronic device 100 to switch to and activate a next NFC emulation card. For example, a card swiping sequence of NFC emulation cards after the electronic device 100 is powered off is an access card of cell A, a door key of home, and an access card of cell B. When activating the access card of cell A, the electronic device 100 may switch to and activate the door key of home after receiving input of the user for the volume button 2. When activating the access card of cell A, the electronic device 100 may switch to and activate the access card of cell B after receiving input of the user for the volume button 1. It should be noted that the volume button includes but is not limited to the volume button 1 and the volume button 2, and the volume button may also include a press switch 1 and a press switch 2. A function of the press switch 1 is the same as a function of the volume button 1, and a function of the press switch 2 is the same as a function of the volume button 2.

Optionally, after the electronic device 100 is powered on, when the electronic device 100 plays audio data, the volume button 1 and the volume button 2 may be used to adjust volume at which the electronic device 100 plays an audio. When the electronic device 100 does not play audio data, the volume button 1 and the volume button 2 may be used to switch to and activate an NFC emulation card.

Optionally, as shown by the arrow 48, after entering the radio frequency field transmitted by the NFC card reading device 200, the electronic device 100 may obtain energy from the radio frequency field of the NFC card reading device 200 through electromagnetic induction through the NFC antenna, and generate power based on the obtained energy, to drive the button module 106, so that, after receiving input of the user for a specified button, the button module 106 can trigger the NFC module 102 or the storage module 107 to switch to and activate an NFC emulation card.

The following describes an NFC protocol stack provided in embodiments of this application.

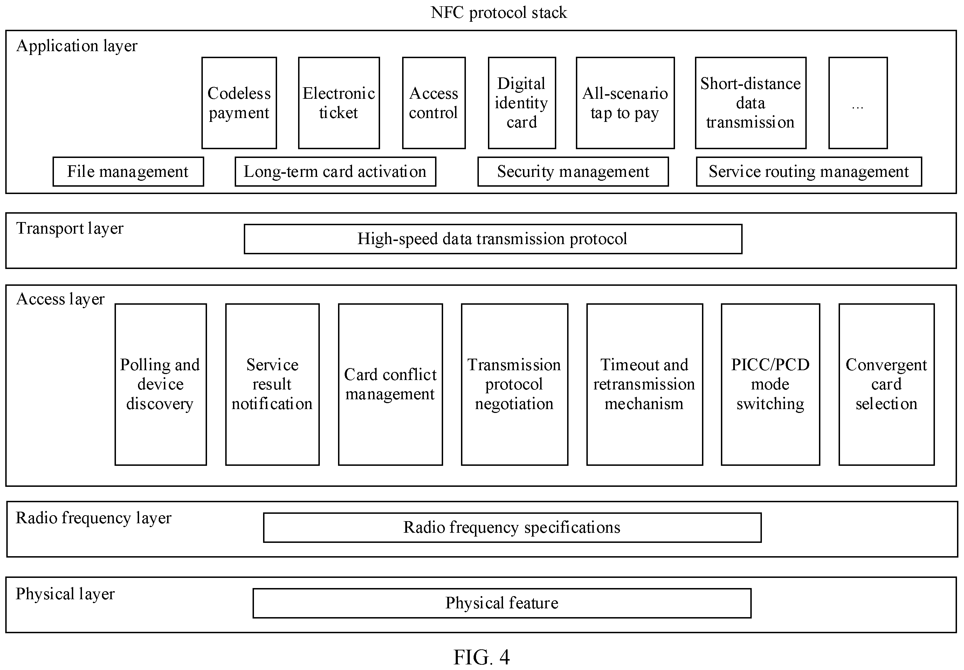

FIG. 4 is a diagram of an NFC protocol stack according to an embodiment of this application.

As shown in FIG. 4, the NFC protocol stack may include a physical layer, a radio frequency layer, an access layer, a transport layer, and an application layer.

The physical layer may be configured to implement physical characteristics in NFC technology communication.

The radio frequency layer may be configured to implement radio frequency specifications, for example, a data rate and a frequency of a radio frequency signal, in NFC technology communication.

The access layer may be configured to implement functions such as polling and device discovery, service result notification, card conflict management, transmission protocol negotiation, timeout and retransmission mechanisms, PICC/PCD mode switching, and convergent card selection.

The transport layer includes a high-speed data transmission protocol, and data transmission between a PCD and a PICC at the application layer may be implemented according to the high-speed data transmission protocol.

The application layer may be configured to implement one or more NFC services and one or more service management policies. The one or more NFC services may include codeless payment, an electronic ticket, access control, a digital identity card, all-scenario tap to pay, short-distance data transmission, and the like. The one or more service management policies may include any one or more of file management, long-time card activation, security management, service routing management, and the like. Processing logic of the NFC service may be executed by an applet. In a possible implementation, processing logic of the service management policy may be executed by an NFC basic service module.

The following describes a process in which a user manually selects an NFC emulation card on an electronic device 100 for card swiping in embodiments of this application.

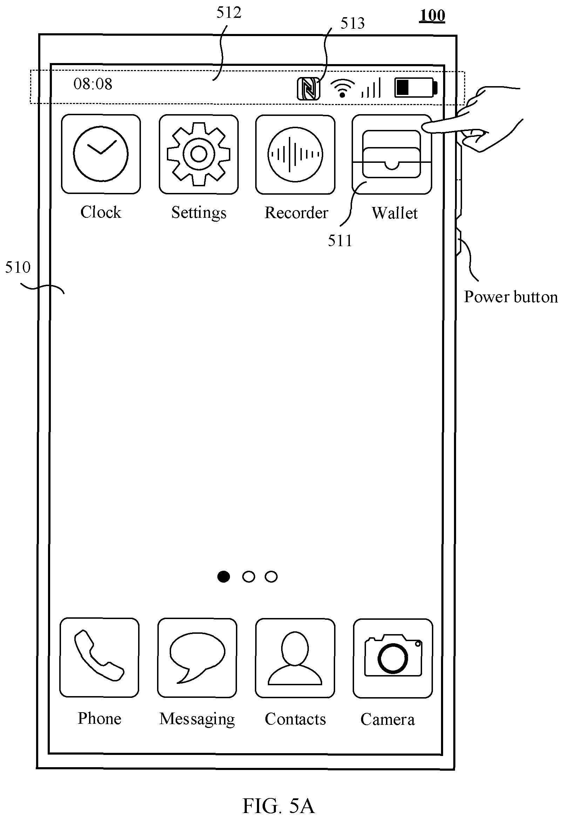

FIG. 5A to FIG. 5D are a group of diagrams of a process in which a user manually selects an NFC emulation card for card swiping according to an embodiment of this application.

As shown in FIG. 5A, the electronic device 100 may display a desktop 510. The desktop 510 may include icons of one or more applications. For example, the icons of the one or more applications may include an icon 511 of a wallet application, an icon of a clock application, an icon of a settings application, an icon of a recorder application, an icon of a phone application, an icon of a messaging application, an icon of a contacts application, and an icon of a camera application. A status bar 512 may be displayed on the top of the desktop 510. The status bar 512 may include one or more status indicators, and the one or more status indicators may include but are not limited to a strength indicator of a communication signal (for example, a cellular network signal or a WLAN signal), a time indicator, a power indicator, an NFC function indicator 513, a time indicator, and the like. When the electronic device 100 displays the NFC function indicator 513 in the status bar 512, it may indicate that the electronic device 100 enables an NFC function. The electronic device 100 includes a power button.

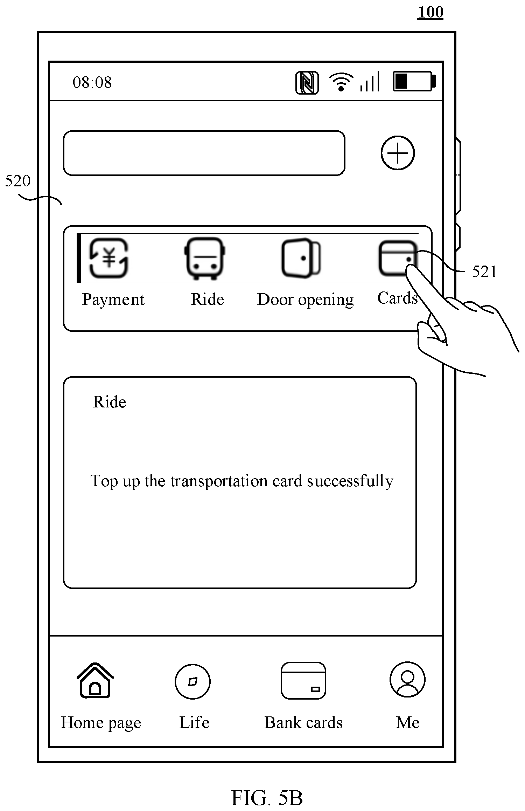

The electronic device 100 may receive input (for example, a tap) of the user for the icon 511 of the wallet application. In response to the input, the electronic device 100 may display a wallet application interface 520 shown in FIG. 5B.

As shown in FIG. 5B, the wallet application interface 520 may include one or more function controls. The one or more function controls may include a cards control 521, a payment control, a ride control, a door opening control, and the like.

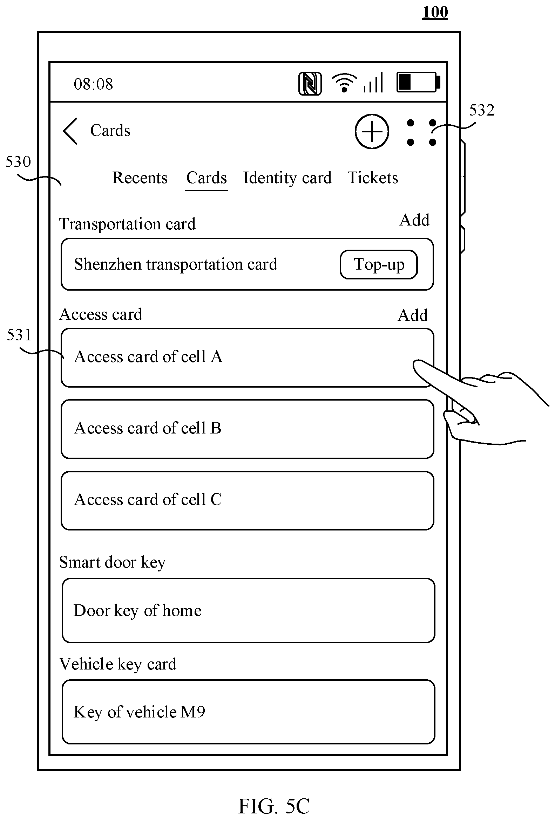

The electronic device 100 may receive input (for example, a tap) of the user for the cards control 521. In response to the input, the electronic device 100 may display a cards interface 530 shown in FIG. 5C.

As shown in FIG. 5C, the cards interface 530 may include options of one or more types of NFC emulation cards activated by the user. The options of the one or more types of NFC emulation cards may include an option of a transportation card, an option of an access card, an option of a smart door key card, an option of a vehicle key card, and the like. For example, the option of the transportation card may include an option of a Shenzhen Tong transportation card. The option of the access card may include an option 531 of an access card of cell A, an option of an access card of cell B, an option of an access card of cell C, and the like. The option of the smart door key card may include an option of a door key card of home. The option of the vehicle key card may include an option of a key card of vehicle M9.

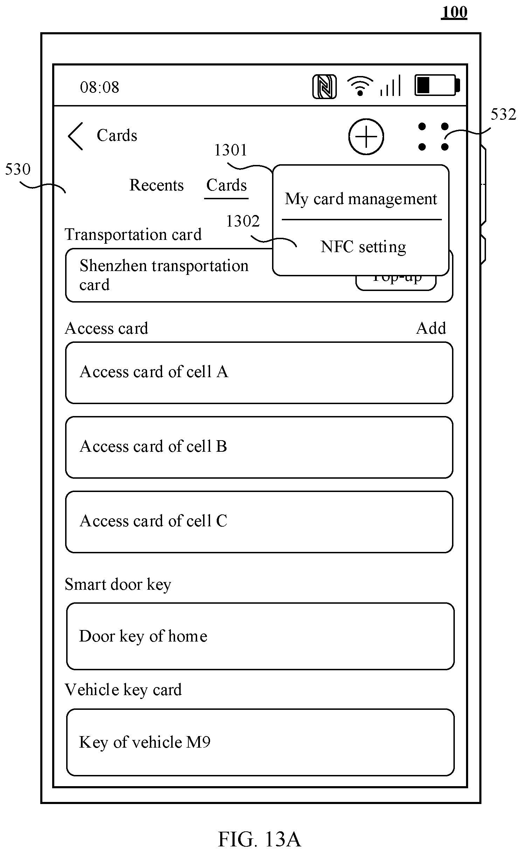

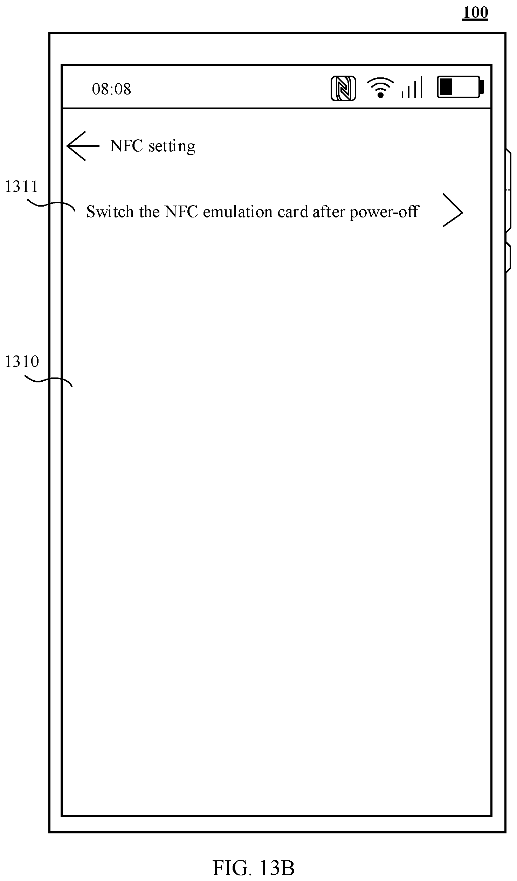

Optionally, the cards interface 530 may further include a control 532. The control 532 may be used to trigger the electronic device 100 to display one or more function controls. The one or more function controls may include but are not limited to a "My card management" control and an "NFC setting" control (for example, a function control 1302 shown in FIG. 13A). The "My card management" control may be used to trigger the electronic device 100 to display an interface for managing an NFC emulation card (for example, adding an NFC emulation card, deleting an NFC emulation card, or copying an NFC emulation card). The "NFC setting" control may be used to trigger the electronic device 100 to display an interface (for example, a setting interface 1310 shown in FIG. 13B) for setting a card swiping function of an NFC emulation card.

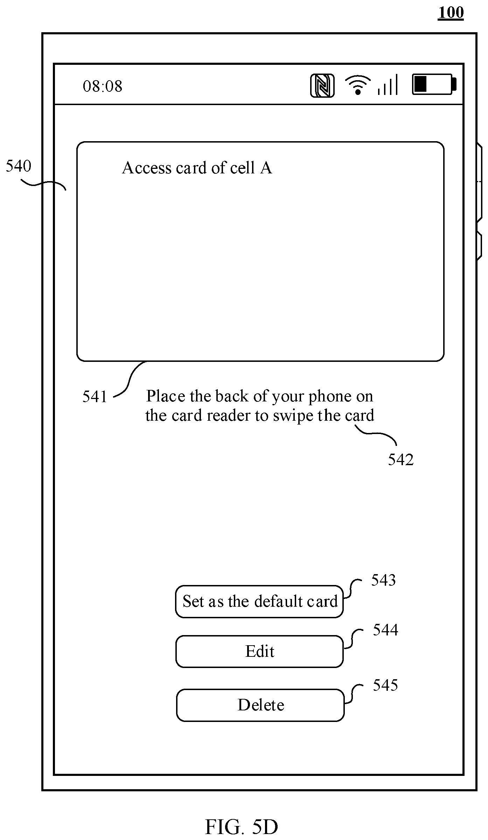

The electronic device 100 may receive input (for example, a tap) of the user for the option 531 of the access card of cell A. In response to the input, the electronic device 100 may display a card swiping interface 540 shown in FIG. 5D.

As shown in FIG. 5D, the card swiping interface 540 may include an icon 541 of the access card of cell A. Optionally, the card swiping interface 540 may further include a card swiping prompt 542, and a type of the card swiping prompt 542 may include one or more of a text prompt, an image prompt, a sound prompt, a vibration prompt, and the like. For example, the card swiping prompt 542 may be a text prompt "Place the back of your phone on the card reader to swipe the card". Optionally, the card swiping interface 540 may further include a default card setting control 543, an edit control 544, and a delete control 545. The default card setting control 543 may be used to set the access card of cell A as a default NFC emulation card. The edit control 544 may be used to edit a name of the access card of cell A. The delete control 545 may be used to delete data of the access card of cell A.

If the electronic device is close to an NFC card reading device when displaying the card swiping interface 540, the electronic device 100 may exchange data of an NFC emulation card (for example, the access card of cell A) corresponding to the card swiping interface 540 with the NFC card reading device. If the NFC emulation card corresponding to the card swiping interface 540 matches the NFC card reading device, the electronic device 100 and the NFC card reading device can complete an NFC service of the NFC emulation card corresponding to the card swiping interface 540. For example, the electronic device 100 completes verification with an NFC card reading device on a gate of the cell A based on the data of the access card of cell A, to open the gate of the cell A.

It can be learned from the foregoing card swiping process that, when the user wants to execute a target NFC service via the electronic device 100 in a PICC mode, the user needs to start the wallet application and manually select a target NFC emulation card corresponding to the target NFC service, and then places the electronic device 100 close to the NFC card reading device, to complete the target NFC service. In this way, each time the user wants to use an NFC service, the user needs to start the wallet application and reselect a target NFC emulation card. Consequently, it is inconvenient for the user to operate.

In a possible implementation, the user may set a frequently used NFC emulation card as a default NFC emulation card in an application. In this way, when the electronic device 100 is close to the NFC card reading device, the electronic device 100 can exchange data of the default NFC emulation card with the NFC card reading device. However, when the default NFC emulation card does not match the NFC card reading device, the user also needs to start an application on the electronic device 100 and reselect a target NFC emulation card to exchange with the NFC card reading device. Consequently, an operation is complex.

In a possible implementation, when detecting a power-off condition, the electronic device 100 may activate a default NFC emulation card. The power-off condition may include but is not limited to a case in which power is less than preset power-off power and power-off input is received. In this way, when the electronic device 100 is close to the NFC card reading device, the electronic device 100 can exchange data of the default NFC emulation card with the NFC card reading device.

For example, the electronic device 100 displays the card swiping interface 540 shown in FIG. 5D. After receiving input of the user for the default card setting control 543, the electronic device 100 may set the access card of cell A as a default NFC emulation card in response to the input.

After setting the access card of cell A as the default NFC emulation card, the electronic device 100 may detect the power-off condition, and activate the access card of cell A. After being powered off, the electronic device 100 may complete verification with the NFC card reading device on the gate of the cell A based on the data of the access card of cell A, to open the gate of the cell A.

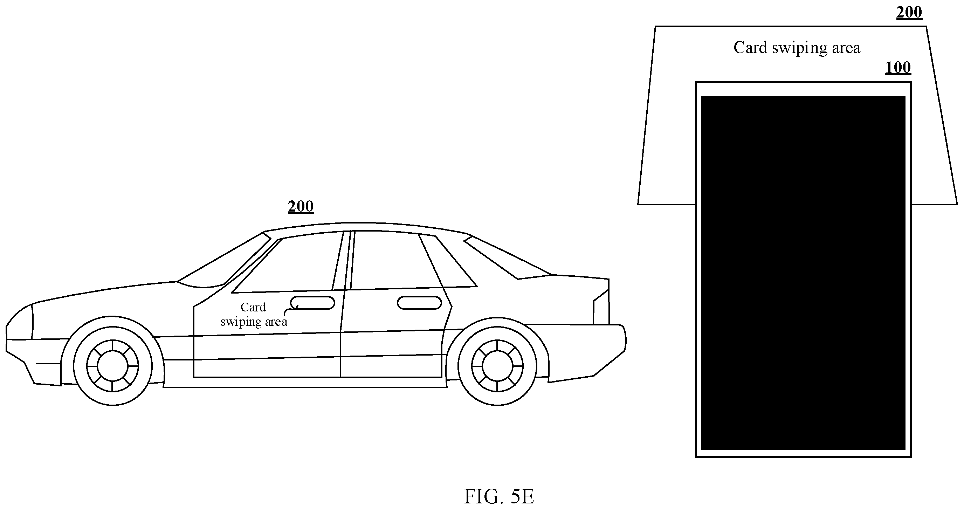

However, as shown in FIG. 5E, when the electronic device 100 that is powered off is close to the NFC card reading device 200, because the access card of cell A does not match the NFC card reading device 200, the electronic device 100 fails to execute a card swiping service with the NFC card reading device 200 based on the access card of cell A. In this way, the user cannot trigger, via the electronic device 100, the NFC card reading device 200 to execute the card swiping service. That is, after the electronic device 100 is powered off, when the default NFC emulation card does not match the NFC card reading device, the electronic device 100 fails to perform card swiping and cannot switch the NFC emulation card. The user can manually switch to a target NFC emulation card only after the electronic device 100 is powered on. If the electronic device 100 is powered off due to insufficient power, the user further needs to find a power supply for charging, and then power on the electronic device to perform card switching. This is inconvenient.

Therefore, embodiments of this application provide an NFC emulation card switching method. The electronic device 100 activates a first NFC emulation card. After entering a radio frequency field transmitted by the NFC card reading device 200, the electronic device 100 may execute a card swiping service with the NFC card reading device 200 based on the first NFC emulation card. The electronic device 100 may switch to and activate a second NFC emulation card when the specified switching condition is met. The electronic device 100 may execute a card swiping service with the NFC card reading device 200 based on the second NFC emulation card. The specified switching condition may include but is not limited to one or more of the following: The electronic device 100 fails to perform card swiping based on the first NFC emulation card, the electronic device 100 receives specified input for a specified button, the electronic device 100 detects that the electronic device 100 leaves the radio frequency field of the NFC card reading device 200 and then re-enters the radio frequency field, and the electronic device 100 detects that a time difference between a current moment and a moment of entering the NFC card reading device 200 reaches a preset time difference.

In this way, the electronic device 100 can switch the NFC emulation card when the specified switching condition is met, thereby increasing an NFC card swiping speed and improving NFC card swiping efficiency. After the electronic device 100 is powered on, when it is inconvenient for the user to gaze at the cards interface 530, the NFC emulation card can also be switched by using the foregoing steps. After the electronic device 100 is powered off, the electronic device 100 can also switch between different NFC emulation cards when the specified switching condition is met, and can switch the NFC emulation card without powering on the electronic device 100. In this way, when the electronic device 100 is powered off due to low power, the user can also implement a card swiping service via the electronic device 100, and an application scenario is more extensive.

The following describes a near field communication emulation card switching method provided in this embodiment of this application.

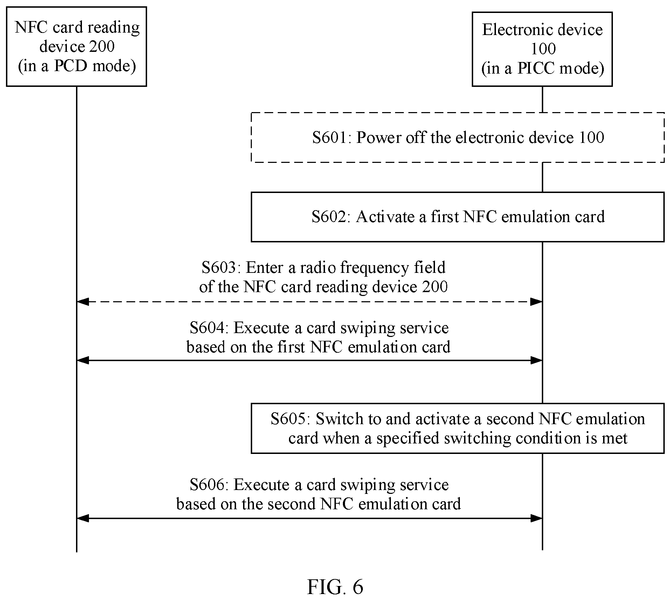

For example, as shown in FIG. 6, the NFC emulation card switching method includes the following steps.

S601: Power off an electronic device 100.

In some examples, when detecting a power-off condition of the electronic device 100, the electronic device 100 may display prompt information 61. The prompt information 61 may be used to prompt a user that a plurality of NFC emulation cards (for example, an NFC emulation cards in a first card swiping set) may also be used for card swiping after power-off. In this way, the user can learn of the plurality of NFC emulation cards that can be used after power-off.

In some examples, the electronic device 100 may further display prompt information 62. The prompt information 62 is used to prompt the user how to operate the electronic device 100 to meet a specified switching condition and switch an NFC emulation card. This can help the user learn of how to switch the NFC emulation card after the electronic device 100 is powered off.

An NFC card reading device 200 may operate in a PCD mode. The electronic device 100 may operate in a PICC mode after being powered off.

S602: The electronic device 100 activates a first NFC emulation card.

In some examples, that the electronic device 100 activates the NFC emulation card may indicate that the electronic device 100 sends an access layer parameter of an NFC emulation card in a storage module 107 to an NFC module 102. The access layer parameter may include but is not limited to a unique identifier (unique identifier, UID) of the NFC emulation card.

In some other examples, the electronic device 100 is provided with a default NFC emulation card. After being powered on, the electronic device 100 may activate the default NFC emulation card. When the power-off condition is detected or after the electronic device 100 is powered off, the electronic device 100 may switch to and activate the first NFC emulation card in the first card swiping set.

S603: The electronic device 100 enters a radio frequency field of the NFC card reading device 200.

S604: The electronic device 100 executes a card swiping service with the NFC card reading device 200 based on the first NFC emulation card.

The electronic device 100 may send card information of the first NFC emulation card to the NFC card reading device 200 through NFC data exchange. The NFC card reading device 200 may execute the card swiping service of the first NFC emulation card based on the card information of the first NFC emulation card. It may be understood that, when the first NFC emulation card matches the NFC card reading device 200, the NFC card reading device 200 successfully executes the card swiping service of the first NFC emulation card. When the first NFC emulation card does not match the NFC card reading device 200, the NFC card reading device 200 fails to execute the card swiping service of the first NFC emulation card.

It should be noted that, when an NFC emulation card (for example, the first NFC emulation card) activated by the electronic device 100 does not support an application layer protocol, the NFC card reading device 200 may implement a card swiping service of the NFC emulation card based on a UID of the NFC emulation card. The NFC card reading device 200 may determine a card swiping result of the NFC emulation card based on the UID of the NFC emulation card activated by the electronic device 100. For example, the NFC emulation card that does not support the application layer protocol may be an access card. For example, the NFC card reading device 200 may send a select (select) command to the electronic device 100, and the electronic device 100 may send card information of the activated NFC emulation card to the NFC card reading device 200 after receiving the select command.

When an NFC emulation card activated by the electronic device 100 supports an application layer protocol, the electronic device 100 may send card information of the NFC emulation card to the NFC card reading device 200 at an application layer. The NFC card reading device 200 may implement a card swiping service of the NFC emulation card based on the card information of the NFC emulation card.

S605: The electronic device 100 switches to and activates a second NFC emulation card when the specified switching condition is met.

The first NFC emulation card and the second NFC emulation card are NFC emulation cards activated on the electronic device 100, and the second NFC emulation card is different from the first NFC emulation card. The electronic device 100 may switch to and activate the second NFC emulation card when the specified switching condition is met.

Specifically, the electronic device 100 may determine the first NFC emulation card and the second NFC emulation card based on the first card swiping set. The first card swiping set may include a part or all of a plurality of NFC emulation cards activated on the electronic device 100. Herein, the first card swiping set includes the first NFC emulation card and the second NFC emulation card. When entering the radio frequency field of the NFC card reading device 200, the electronic device 100 may determine the first NFC emulation card based on the first card swiping set. When determining that the specified switching condition is met, the electronic device 100 may determine the second NFC emulation card based on the first card swiping set.

In some examples, when detecting the power-off condition or adding/deleting an NFC emulation card, the electronic device 100 may send the first card swiping set to the NFC module 102 or the storage module 107. After the electronic device 100 is powered off, the NFC module 102 or the storage module 107 of the electronic device 100 may determine the NFC emulation card based on the first card swiping set.

In some examples, in addition to a bank card, the first card swiping set includes an NFC emulation card on the electronic device 100. In this way, because the electronic device 100 cannot verify a payment operation after being powered off, the electronic device 100 does not activate the bank card after being powered off, thereby protecting assets of the user.

In some other examples, the electronic device 100 may receive input of the user and set the first card swiping set. In this way, the user can set an NFC emulation card that can be used after power-off, so that the user can switch to an NFC emulation card that is more likely to be used, thereby shortening a switching time. For example, when detecting the power-off condition, or after receiving the first card swiping set set by the user, or when adding/deleting an NFC emulation card in the first card swiping set, the electronic device 100 may send the first card swiping set to the NFC module 102 or the storage module 107.

The electronic device 100 may randomly select an unactivated NFC emulation card in the first card swiping set after power-off. Alternatively, the electronic device 100 may sequentially select NFC emulation cards in the first card swiping set in a card activating sequence of the NFC emulation cards in the first card swiping set. Alternatively, the electronic device 100 may sequentially select NFC emulation cards in the first card swiping set based on card swiping frequencies of the NFC emulation cards in the first card swiping set. For example, an NFC emulation card with a higher card swiping frequency has a higher card swiping rank. Alternatively, the electronic device 100 may sequentially select NFC emulation cards in the first card swiping set in a card storage sequence of the NFC emulation cards in the first card swiping set, and the like.

In some other examples, the first card swiping set includes one or more NFC emulation cards. There is a card swiping sequence between one or more NFC emulation cards in the first card swiping set. For example, when the first card swiping set is (the first NFC emulation card and the second NFC emulation card), it indicates that the first NFC emulation card ranks first in the card swiping sequence, and the second NFC emulation card ranks second in the card swiping sequence. In this way, the electronic device 100 can sequentially switch to and activate the NFC emulation cards in the card swiping sequence, so that the user can select, in different card swiping scenarios, to switch to an NFC emulation card that needs to be used.

Optionally, the electronic device 100 may receive input of the user, and set the card swiping sequence of the one or more NFC emulation cards in the first card swiping set. In this way, the user can set the card swiping sequence based on a use habit, so that the user can more quickly switch to, in a proper card swiping scenario, an NFC emulation card that needs to be used, thereby shortening a time consumed for switching an NFC emulation card.

The electronic device 100 may determine, in one or more of the following cases, that the specified switching condition is met, and switch to and activate the second NFC emulation card.

Case 1: The electronic device 100 detects that card swiping based on the first NFC emulation card fails. For example, the NFC card reading device 200 may send a card swiping result of the first NFC emulation card to the electronic device 100 through NFC command exchange. When receiving the card swiping result indicating that card swiping of the first NFC emulation card fails, the electronic device 100 may determine that the specified switching condition is met, and switch to and activate the second NFC emulation card.

In some examples, when an NFC emulation card that matches the NFC card reading device 200 supports the application layer protocol and an NFC emulation card activated by the electronic device 100 supports the application layer protocol, the NFC card reading device 200 may send an applet select (Select AID) command to the electronic device 100 in a process in which the NFC card reading device 200 and the electronic device 100 perform signaling exchange at an application layer, where the applet select command carries an identifier of an applet. Service processing logic of the NFC emulation card in the electronic device 100 is specifically implemented by the applet. The applet may be stored and run in a hardware component or a software module (for example, a SIM card or an SE) corresponding to the NFC emulation card. The first NFC emulation card corresponds to a first applet. After receiving the command, the electronic device 100 may detect whether an identifier of the first applet corresponding to the currently activated first NFC emulation card is the same as the identifier carried in the applet select command. When detecting that the identifier of the first applet corresponding to the first NFC emulation card is different from the identifier carried in the applet select command, the electronic device 100 may determine that the card swiping service of the first NFC emulation card fails to be executed with the NFC card reading device 200, determine that the specified switching condition is met, and switch to and activate the second NFC emulation card.

Case 2: The electronic device 100 receives input of the user for a specified button. The specified button may be a volume button or a power button.

Case 3: The electronic device 100 detects that the electronic device 100 leaves the radio frequency field of the NFC card reading device 200 and re-enters the radio frequency field of the NFC card reading device 200.

Case 4: The electronic device 100 detects that a time difference between a current moment and a moment at which the electronic device 100 activates the first NFC emulation card reaches a preset time difference.

Case 5: The electronic device 100 detects that card swiping based on the first NFC emulation card fails, and detects that the electronic device 100 leaves the radio frequency field of the NFC card reading device 200 and re-enters the radio frequency field of the NFC card reading device 200. In this way, after card swiping on the NFC card reading device 200 fails, the electronic device 100 switches the NFC emulation card, so that the user can quickly switch to an NFC emulation card that matches the NFC card reading device 200.

Case 6: The electronic device 100 fails to perform card swiping based on the first NFC emulation card, and detects that a time difference between a current moment and a moment at which the electronic device 100 activates the first NFC emulation card reaches a preset time difference.

It should be noted that, through comparison between switching to a to-be-activated NFC emulation card based on the switching condition shown in Case 2 to Case 6 and switching to the to-be-activated NFC emulation card based on the switching condition shown in Case 1, the user can more clearly learn of a process in which the electronic device 100 switches the NFC emulation card.

S606: The electronic device 100 executes a card swiping service with the NFC card reading device 200 based on the second NFC emulation card.

After switching to and activating the second NFC emulation card, the electronic device 100 may execute the card swiping service of the second NFC emulation card with the NFC card reading device 200 in the radio frequency field of the NFC card reading device 200.

It may be understood that if the first card swiping set includes a third NFC emulation card. After activating the second NFC emulation card, the electronic device 100 may switch to and activate the third NFC emulation card when the specified switching condition is met. The third NFC emulation card is the same as or different from the first NFC emulation card. In this way, when the first card swiping set includes only two NFC emulation cards, the third NFC emulation card to which the electronic device 100 switches is the first NFC emulation card. When the first card swiping set includes three or more NFC emulation cards, the third NFC emulation card to which the electronic device 100 switches is different from the first NFC emulation card. It should be noted that, if the specified condition is that a time difference between a current moment and a moment of entering the radio frequency field of the NFC card reading device 200 reaches the preset time difference, after the electronic device 100 switches to and activates the second NFC emulation card, the specified condition is updated to that a time difference between a current moment and a moment of switching to and activating the previous NFC emulation card reaches the preset time difference.

In some examples, after switching to and activating the second NFC emulation card, the electronic device 100 may activate the first NFC emulation card based on the first card swiping set after preset sleep duration. In this way, after switching to an NFC emulation card that is after the first NFC emulation card in card swiping sequence, the electronic device 100 may return to the first NFC emulation card after the preset sleep duration, so that the user can execute a card swiping service again on a different NFC card reading device based on the first NFC emulation card that ranks first in the first card swiping set, the user can learn of a currently used NFC emulation card, and the user can quickly switch to a desired NFC emulation card based on the first card swiping set.

In some other examples, after switching to and activating the second NFC emulation card, the electronic device 100 keeps activating the second NFC emulation card when entering a radio frequency field of an NFC card reading device (for example, the NFC card reading device 200) before the specified switching condition is met. In this way, the user can set the first card swiping set in a use sequence of the user. For example, the user may set a vehicle key as an NFC emulation card that ranks first, and set a door key of home as an NFC emulation card that ranks after the vehicle key, so that, after triggering unlocking of a vehicle based on the vehicle key, the user can switch to the door key of home after the specified switching condition is met, and after driving home, the user can trigger unlocking of a door lock based on the door key of home. This better matches the use habit of the user.

In some other examples, step S601 is an optional step. After being powered on, the electronic device 100 may also perform step S602 to step S606 when an NFC function is enabled and the electronic device operates in the PICC mode. In this way, the user does not need to gaze at a display of the electronic device 100, and can also switch, by using the steps shown in FIG. 6, the NFC emulation card activated by the electronic device 100. It may be understood that, after the electronic device 100 is powered on, the electronic device 100 can select the first NFC emulation card and the second NFC emulation card based on the first card swiping set via a processor 101.

In some examples, after being powered on, the electronic device 100 may determine the first card swiping set based on a location of the electronic device 100. For example, when detecting that the electronic device 100 is in a company of the user, the electronic device 100 may set the first card swiping set to include an access card of the company and a vehicle key. For another example, when detecting that the electronic device 100 is in a residential area of the user, the electronic device 100 may set the first card swiping set to include an access card of the residential area, a door key of home, and a vehicle key. In this way, the electronic device 100 can set different first card swiping sets at different locations, and the first card swiping set includes an activated NFC emulation card that may be used at the location, to reduce a frequency of switching the NFC emulation card by the user.

In some examples, after being powered on, the electronic device 100 may determine the first card swiping set based on a current moment. For example, when detecting that the current moment belongs to working hours (for example, 7:00 to 10:00), the electronic device 100 may set the first card swiping set to include a transportation card, a vehicle key, and an access card of a company. In this way, it is convenient for the user to travel and go to work. For another example, when detecting that a current moment belongs to non-working hours, the electronic device 100 may set the first card swiping set to include a vehicle key, a transportation card, an access card of a residential area, and a door key of home. In this way, it is convenient for the user to go home after work. In this way, the electronic device 100 can set different first card swiping sets for different time periods, and the first card swiping set includes an activated NFC emulation card that may be used within the time period, to reduce a frequency of switching the NFC emulation card by the user.

In some examples, after the NFC card reading device 200 executes a card swiping service with the electronic device 100, the NFC card reading device 200 executes a card swiping service with the electronic device in the radio frequency field of the NFC card reading device 200 after preset waiting duration. In this way, repeated card swiping can be avoided.

In a possible implementation, the electronic device 100 activates the first NFC emulation card. After entering the radio frequency field transmitted by the NFC card reading device 200, the electronic device 100 may execute a card swiping service with the NFC card reading device 200 based on the first NFC emulation card. After receiving specified input for a specified button via a button module 106, the electronic device 100 may switch to and activate the second NFC emulation card in response to the specified input. The electronic device 100 may execute a card swiping service with the NFC card reading device 200 based on the second NFC emulation card. In this way, the user can switch the NFC emulation card via the specified button, so that the user can manually switch the NFC emulation card when it is inconvenient to gaze at the display of the electronic device 100 (for example, after the electronic device 100 is powered off).

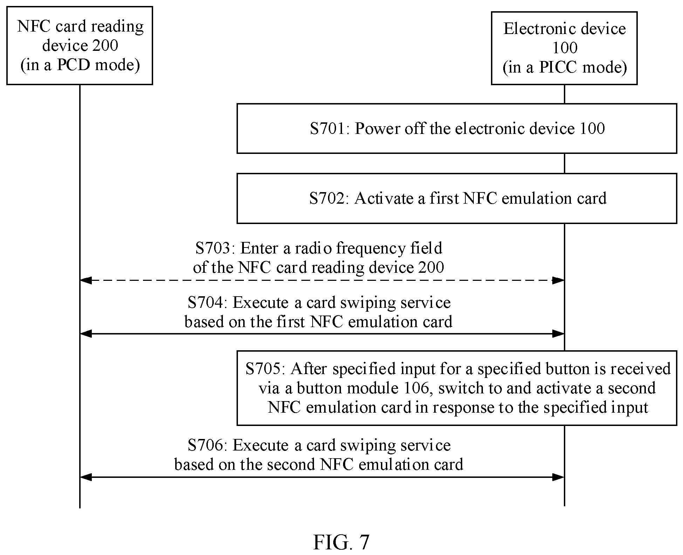

For example, as shown in FIG. 7, the NFC emulation card switching method includes the following steps.

S701: Power off an electronic device 100.

In some examples, when detecting a power-off condition of the electronic device 100, the electronic device 100 may display prompt information 71. The prompt information 71 may be used to prompt a user that the electronic device 100 can be triggered, via specified input for a specified button, to switch to a to-be-activated NFC emulation card. This can help the user learn of how to trigger, after the electronic device 100 is powered off, the electronic device 100 to switch the NFC emulation card.

S702: The electronic device 100 activates a first NFC emulation card.

S703: The electronic device 100 enters a radio frequency field of an NFC card reading device 200.

The NFC card reading device 200 may operate in a PCD mode. The electronic device 100 may operate in a PICC mode after being powered off.

S704: The electronic device 100 executes a card swiping service with the NFC card reading device 200 based on the first NFC emulation card.

The electronic device 100 may send card information of the first NFC emulation card to the NFC card reading device 200 through NFC data exchange. The NFC card reading device 200 may execute the card swiping service of the first NFC emulation card based on the card information of the first NFC emulation card.

S705: After receiving specified input for a specified button via a button module 106, the electronic device 100 switches to and activates a second NFC emulation card in response to the specified input.

After receiving the specified input for the specified button via the button module 106, the electronic device 100 switches to and activates the second NFC emulation card in response to the specified input. For example, the specified input for the specified button may be single-tap input or double-tap input for a power button or single-tap input for a volume button. For descriptions of switching to and activating the second NFC emulation card by the electronic device 100, refer to the embodiment shown in FIG. 6. Details are not described herein again.

In some examples, there is a card swiping sequence between a plurality of NFC emulation cards in a first card swiping set. After activating the first NFC emulation card that ranks first in the first card swiping set, the electronic device 100 receives the specified input for the specified button within preset sleep duration, and switches to and activates the second NFC emulation card that ranks second in the first card swiping set. After activating the first NFC emulation card that ranks first in the first card swiping set, the electronic device 100 activates the first NFC emulation card after the preset sleep duration. In this way, when the user does not swipe a card via the electronic device 100 for a long period of time, when entering the radio frequency field of the NFC card reading device 200, the electronic device 100 can activate the NFC emulation card that ranks first in the first card swiping set, so that the user determines the card swiping sequence of the plurality of NFC emulation cards in the first card swiping set, and quickly switches to a desired NFC emulation card.

It should be noted that, when receiving the specified input for the specified button in the radio frequency field of the NFC card reading device 200 (for example, in a process in which the electronic device 100 executes the card swiping service with the NFC card reading device 200 based on the first NFC emulation card), the electronic device 100 may switch to and activate the second NFC emulation card. When receiving the specified input for the specified button outside the radio frequency field of the NFC card reading device 200, the electronic device 100 may also switch to and activate the second NFC emulation card. An occasion of receiving the specified input is not limited in embodiments of this application.

S706: The electronic device 100 executes a card swiping service with the NFC card reading device 200 based on the second NFC emulation card.

The electronic device 100 may send card information of the second NFC emulation card to the NFC card reading device 200 through NFC data exchange. The NFC card reading device 200 may execute the card swiping service of the second NFC emulation card based on the card information of the second NFC emulation card.

It may be understood that, if the first card swiping set includes the first NFC emulation card, the second NFC emulation card, and a third NFC emulation card, after activating the second NFC emulation card and when receiving the specified input via the button module 106, the electronic device 100 can switch to and activate the third NFC emulation card in the first card swiping set in response to the specified input.

In some other examples, step S701 is an optional step. After being powered on, the electronic device 100 may also perform step S702 to step S706 when an NFC function is enabled and the electronic device operates in the PICC mode. In this way, the user does not need to gaze at a display of the electronic device 100, and can also switch, by using the steps shown in FIG. 7, the NFC emulation card activated by the electronic device 100.

The following describes, with reference to the hardware structure of the electronic device 100 shown in FIG. 3A, the NFC emulation card switching method provided in embodiments of this application.

For example, as shown in FIG. 8A, FIG. 8B, and FIG. 8C, the NFC emulation card switching method may be applied to an NFC system including an electronic device 100 and an NFC card reading device 200. The electronic device 100 may be in a PICC mode. For example, the electronic device 100 is in the PICC mode by default after an NFC function is enabled. The NFC card reading device 200 may be in a PCD mode. The electronic device 100 may include but is not limited to a processor 101, an NFC module 102, a power module 105, a button module 106, and a storage module 107. An application 108 may run in the processor 101.

S801: The processor 101 detects a power-off condition of the electronic device 100; the application 108 sends a first card swiping set to the storage module 107; and after receiving the first card swiping set, the storage module 107 activates a first NFC emulation card in the first card swiping set.

The processor 101 may send the first card swiping set to the storage module 107 via the application 108 after receiving power-off input of a user via the button module 106 or after detecting, via the power module 105, that power of the electronic device 100 is less than preset power-off power. The application 108 may be an application for setting the first card swiping set. For example, the application 108 may be a wallet application or a settings application.

S802: Power off the electronic device 100 after the application 108 sends the first card swiping set to the storage module 107; and when the electronic device 100 is powered off, the power module 105 stops supplying power to the processor 101, and supplies power to the NFC module 102, the button module 106, and the storage module 107.

When detecting the power-off condition, the processor 101 may control the electronic device 100 to be powered off. Specifically, the processor 101 may send a power-off instruction to the power module 105, and the power module 105 may supply power to the NFC module 102, the button module 106, and the storage module 107 in response to the power-off instruction.

S803: The electronic device 100 enters a radio frequency field of the NFC card reading device 200.

S804: The NFC card reading device 200 sends a card search request to the NFC module 102 of the electronic device 100.

S805: The NFC module 102 sends a card search response to the NFC card reading device 200 after receiving the card search request.

In some examples, the electronic device 100 and the NFC card reading device 200 support a first NFC protocol. For example, the first NFC protocol may be an ISO14443 protocol or an IEC14443 protocol. When the electronic device 100 communicates with the NFC card reading device 200 according to the first NFC protocol, the card search request may be a request command type A (request command type A, REQA). The card search response may be an answer to request type A (answer to request type A, ATQA).

In some examples, after receiving the card search response, the NFC card reading device 200 may send a select (select) command to the NFC module 102. After receiving the select command, the electronic device 100 may send a UID of an activated NFC emulation card to the NFC card reading device 200. When the NFC emulation card activated by the electronic device 100 does not support an application layer protocol, the NFC card reading device 200 may determine a card swiping result of the NFC emulation card based on the UID. It should be noted that, when the NFC emulation card activated by the electronic device 100 does not support the application layer protocol, the NFC card reading device 200 does not perform step S806 and step S811, and the electronic device 100 does not perform step S807 to step S810.

S806: The NFC card reading device 200 sends a card data request to the NFC module 102.

The card data request is used to obtain card information of the NFC emulation card activated by the electronic device 100.

S807: The NFC module 102 sends an obtaining request to the storage module 107 after receiving the card data request.

S808: After receiving the obtaining request, the storage module 107 determines card information of the first NFC emulation card based on the obtaining request.

S809: After determining the card information of the first NFC emulation card, the storage module 107 sends the card information of the first NFC emulation card to the NFC module 102.

S810: After receiving the card information of the first NFC emulation card, the NFC module 102 sends a card data response to the NFC card reading device 200, where the card data response carries the card information of the first NFC emulation card.

S811: The NFC card reading device 200 executes a card swiping service of the first NFC emulation card based on the card information of the first NFC emulation card.

S812: The button module 106 receives specified input.

S813: The button module 106 sends a card switching instruction to the storage module 107 in response to the specified input.

In a possible implementation, the button module 106 may send the card switching instruction to the storage module 107 via another module in response to the specified input. For example, the button module 106 may send the card switching instruction to the power module 105 in response to the specified input. The power module 105 may send the card switching instruction to the storage module 107. In this way, because the power module 105 is connected to each module, the card switching instruction is sent to the storage module 107 by reusing the connection between the power module 105 and each module, and a connection relationship between modules in the electronic device 100 does not need to be changed.

S814: The storage module 107 activates a second NFC emulation card based on the first card swiping set in response to the card switching instruction.

For example, the storage module 107 may determine the second NFC emulation card based on the first card swiping set in response to the card switching instruction, set the second NFC emulation card to an active state, and send an access layer parameter of the second NFC emulation card to the NFC module 102, to activate the second NFC emulation card. Specifically, for description of determining the to-be-activated second NFC emulation card by the storage module 107 based on the first card swiping set, refer to the embodiment shown in FIG. 6. Details are not described herein again.

Optionally, the application 108 may send the first card swiping set to the NFC module 102. After receiving the first card swiping set, the NFC module 102 notifies the storage module 107 to activate the first NFC emulation card, and the storage module 107 activates the first NFC emulation card. After receiving the card data request sent by the NFC card reading device 200, the NFC module 102 may obtain the card information of the first NFC emulation card from the storage module 107, and send the card information of the first NFC emulation card to the NFC card reading device 200. The button module 106 may send the card switching instruction to the NFC module 102 in response to the specified input. The NFC module 102 may determine the second NFC emulation card based on the first card swiping set in response to the card switching instruction. After determining the second NFC emulation card, the NFC module 102 may notify the storage module 107 to activate the second NFC emulation card. After the storage module 107 activates the second NFC emulation card, the NFC module 102 may obtain card information of the second NFC emulation card from the storage module 107 after receiving the card data request from the NFC card reading device 200, and send the card information of the second NFC emulation card to the NFC card reading device 200. In this way, the NFC module 102 can determine the to-be-activated NFC emulation card based on the first card swiping set.

S815: The electronic device 100 enters the radio frequency field of the NFC card reading device 200.

It should be noted that, if the electronic device 100 does not leave the radio frequency field of the NFC card reading device 200 after performing step S810, the electronic device 100 does not perform step S815.

It should be further noted that, in addition to entering the radio frequency field of the NFC card reading device 200, the electronic device 100 may also enter a radio frequency field of another NFC card reading device, and then execute a card swiping service of the second NFC emulation card with the NFC card reading device.

S816: The NFC card reading device 200 sends a card search request to the NFC module 102.

S817: The NFC module 102 sends a card search response to the NFC card reading device 200 after receiving the card search request.

In some examples, after sending the card information of the first NFC emulation card to the NFC card reading device 200, the electronic device 100 does not reply with the card search response before the electronic device 100 switches to and activates the second NFC emulation card or within preset response duration since the card information of the first NFC emulation card is sent. In this way, the electronic device 100 can be prevented from repeatedly swiping the first NFC emulation card.

Step S804, step S805, step S816, and step S817 are optional steps.

S818: The NFC card reading device 200 sends a card data request to the NFC module 102.

S819: The NFC module 102 sends an obtaining request to the storage module 107 after receiving the card data request.

S820: The storage module 107 determines the card information of the second NFC emulation card based on the obtaining request.

S821: After receiving the obtaining request, the storage module 107 sends the card information of the second NFC emulation card to the NFC module 102.

S822: After receiving the card information of the second NFC emulation card, the NFC module 102 sends a card data response to the NFC card reading device 200, where the card data response carries the card information of the second NFC emulation card.

S823: The NFC card reading device 200 executes the card swiping service of the second NFC emulation card based on the card information of the second NFC emulation card.

In this way, the electronic device 100 can implement, via the modules, that after the electronic device 100 is powered off, the user can also switch the NFC emulation card based on the specified input, so that the user selects a desired NFC emulation card. This is applicable to a plurality of different card swiping scenarios.

In a possible implementation, the electronic device 100 activates the first NFC emulation card. After entering the radio frequency field transmitted by the NFC card reading device 200, the electronic device 100 may execute the card swiping service with the NFC card reading device 200 based on the first NFC emulation card. When detecting, via the NFC module 102, that the electronic device 100 leaves the radio frequency field of the NFC card reading device 200 and then re-enters the radio frequency field transmitted by the NFC card reading device 200, the electronic device 100 may switch to and activate the second NFC emulation card. The electronic device 100 may execute the card swiping service with the NFC card reading device 200 based on the second NFC emulation card. In this way, the user can switch the NFC emulation card of the electronic device 100 by moving the electronic device 100 close to the NFC card reading device 200 away and then placing the electronic device close to the NFC card reading device 200 again, so that the user manually switches the NFC emulation card when it is inconvenient to glaze at a display of the electronic device 100.

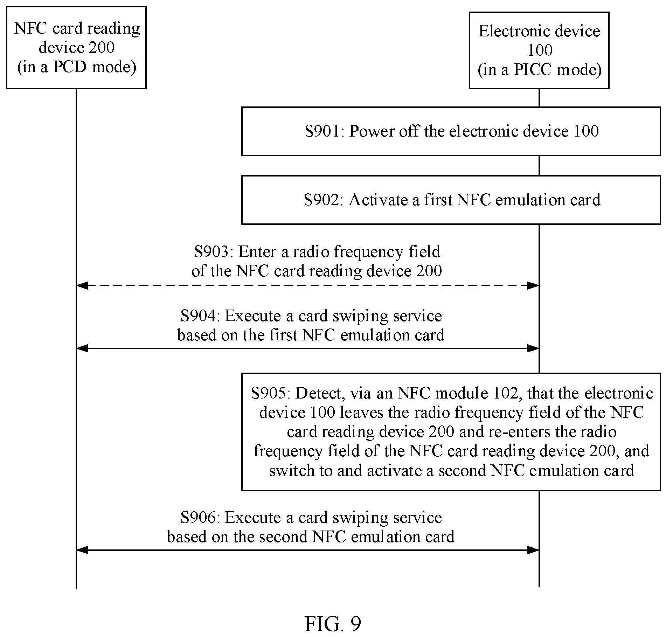

For example, as shown in FIG. 9, the NFC emulation card switching method includes the following steps.

S901: Power off an electronic device 100.

In some examples, when detecting a power-off condition of the electronic device 100, the electronic device 100 may display prompt information 91 before being powered off. The prompt information 91 is used to prompt a user that the electronic device 100 may be moved away from a card swiping area of an NFC card reading device 200 and then the electronic device 100 is placed close to the card swiping area of the NFC card reading device 200, to switch to a to-be-activated NFC emulation card. This can help the user learn of how to trigger, after the electronic device 100 is powered off, the electronic device 100 to switch the NFC emulation card.

S902: The electronic device 100 activates a first NFC emulation card.

S903: The electronic device 100 enters a radio frequency field of the NFC card reading device 200.

The NFC card reading device 200 may operate in a PCD mode. The electronic device 100 may operate in a PICC mode after being powered off.

S904: The electronic device 100 executes a card swiping service with the NFC card reading device 200 based on the first NFC emulation card.

The electronic device 100 may send card information of the first NFC emulation card to the NFC card reading device 200 through NFC data exchange. The NFC card reading device 200 may execute the card swiping service of the first NFC emulation card based on the card information of the first NFC emulation card.

S905: The electronic device 100 detects, via an NFC module 102, that the electronic device 100 leaves the radio frequency field of the NFC card reading device 200 and re-enters the radio frequency field of the NFC card reading device 200, and switches to and activates the second NFC emulation card.

The electronic device 100 may detect, via the NFC module 102, whether the electronic device 100 is in the radio frequency field transmitted by the NFC card reading device 200. For example, when detecting that field strength of the radio frequency field of the NFC card reading device 200 is greater than preset field strength 1, the electronic device 100 may determine that the electronic device 100 enters the radio frequency field of the NFC card reading device 200. When detecting that field strength of the radio frequency field of the NFC card reading device 200 is less than preset field strength 2, the electronic device 100 may determine that the electronic device 100 leaves the radio frequency field of the NFC card reading device 200. The preset field strength 1 and the preset field strength 2 are the same or different. In this way, because a range of the radio frequency field of the NFC card reading device 200 is narrow, the user can move the electronic device 100 slightly to make the electronic device 100 leave the radio frequency field of the NFC card reading device 200. In this way, the electronic device 100 can determine, based on this, that the user wants to switch to and activate the second NFC emulation card, to help the user select an NFC emulation card that matches the NFC card reading device 200.

In some other examples, the NFC card reading device 200 may periodically send a card search request. After entering the radio frequency field of the NFC card reading device 200, the electronic device 100 may receive the card search request. When receiving the card search request, the electronic device 100 may determine that the electronic device enters the radio frequency field of the NFC card reading device 200. In this way, when the electronic device receives the card search request, the field strength of the radio frequency field of the NFC card reading device 200 is definitely greater than the preset field strength, and the electronic device 100 can more accurately determine whether the electronic device 100 enters the radio frequency field of the NFC card reading device 200.

In some other examples, when receiving the card search request from the NFC card reading device 200, the electronic device 100 may determine that the electronic device enters the radio frequency field of the NFC card reading device 200. When the electronic device receives a card swiping result sent by the NFC card reading device 200, or when the electronic device 100 does not receive, within preset receiving duration, NFC signaling sent by the NFC card reading device 200, the electronic device 100 may determine that the electronic device 100 leaves the radio frequency field of the NFC card reading device 200.

In some other examples, when failing to execute the card swiping service based on the first NFC emulation card, the electronic device 100 may detect that the electronic device 100 leaves the radio frequency field of the NFC card reading device 200 and re-enters the radio frequency field of the NFC card reading device 200, determine that a specified switching condition is met, and switch to and activate the second NFC emulation card. When the NFC card reading device 200 successfully executes the card swiping service based on the first NFC emulation card, the electronic device detects that the electronic device 100 leaves the radio frequency field of the NFC card reading device 200 and re-enters the radio frequency field of the NFC card reading device 200, determines that a specified switching condition is not met, and activates the first NFC emulation card. In this way, when successfully performing card swiping based on the first NFC emulation card, the electronic device 100 may not switch to a to-be-activated NFC emulation card, and may continue to use the first NFC emulation card. When using the same NFC card reading device repeatedly, the user can perform card swiping more quickly.

In some other examples, a first card swiping set may represent a card swiping sequence of a plurality of NFC emulation cards. After activating the first NFC emulation card that ranks first in the first card swiping set and leaving the radio frequency field of the NFC card reading device 200, the electronic device 100 re-enters the radio frequency field of the NFC card reading device (for example, the NFC card reading device 200) within preset sleep duration, and switches to and activates the second NFC emulation card that ranks second in the first card swiping set. After activating the first NFC emulation card that ranks first in the first card swiping set and leaving the radio frequency field of the NFC card reading device 200, the electronic device 100 does not enter the radio frequency field of the NFC card reading device within preset sleep duration, and the electronic device 100 activates the first NFC emulation card after the preset sleep duration. In this way, when the user does not swipe a card via the electronic device 100 for a long period of time, when entering the radio frequency field of the NFC card reading device 200, the electronic device 100 can activate the NFC emulation card that ranks first in the first card swiping set, so that the user determines the card swiping sequence of the plurality of NFC emulation cards in the first card swiping set, and quickly switches to a to-be-used NFC emulation card.

S906: The electronic device 100 executes a card swiping service with the NFC card reading device 200 based on the second NFC emulation card.

The electronic device 100 may send card information of the second NFC emulation card to the NFC card reading device 200 through NFC data exchange. The NFC card reading device 200 may execute the card swiping service of the second NFC emulation card based on the card information of the second NFC emulation card.

It may be understood that, if the first card swiping set includes the first NFC emulation card, the second NFC emulation card, and a third NFC emulation card, after activating the second NFC emulation card, the electronic device 100 can detect that the electronic device 100 leaves the radio frequency field of the NFC card reading device 200 and re-enters the radio frequency field of the NFC card reading device 200, and switch to and activate the third NFC emulation card in the first card swiping set.

In some other examples, step S901 is an optional step. After being powered on, the electronic device 100 may also perform step S902 to step S906 when an NFC function is enabled and the electronic device operates in the PICC mode. In this way, the user does not need to gaze at a display of the electronic device 100, and can also switch, by using the steps shown in FIG. 9, the NFC emulation card activated by the electronic device 100.

The following describes, with reference to the hardware structure of the electronic device 100 shown in FIG. 3A, the NFC emulation card switching method provided in embodiments of this application.

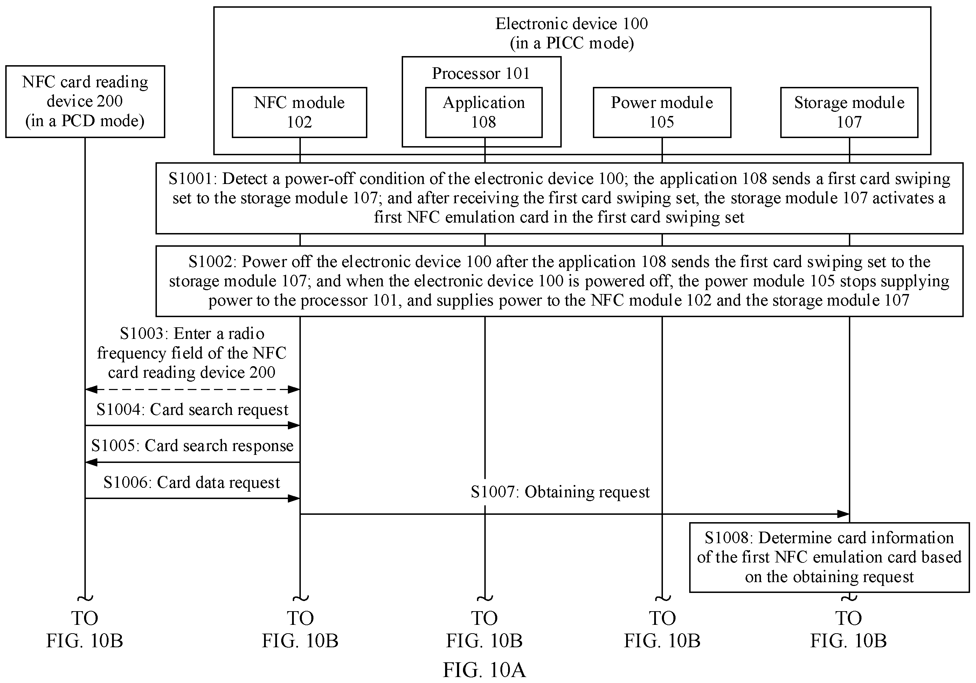

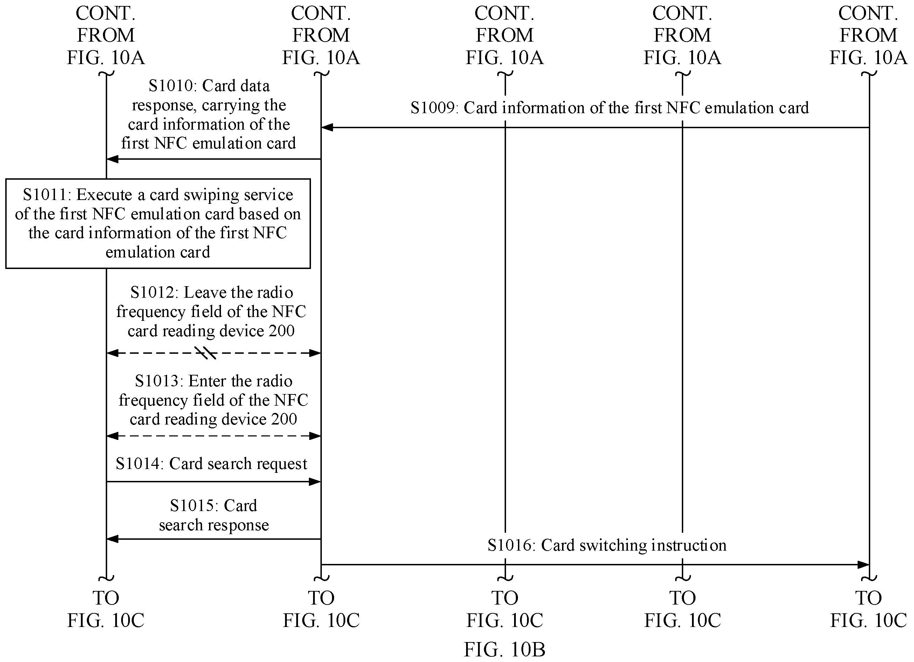

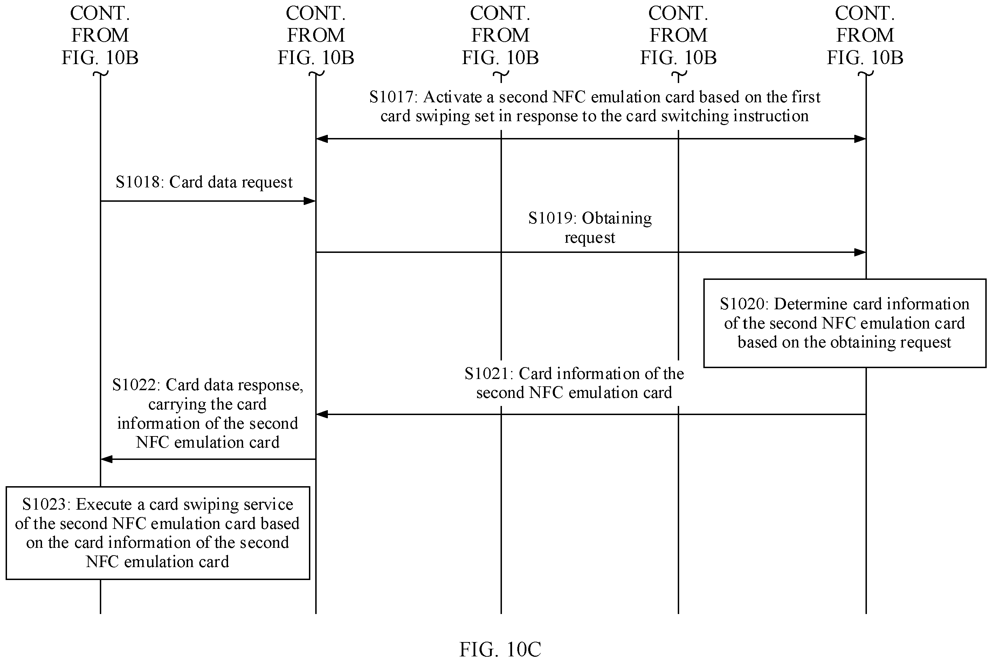

For example, as shown in FIG. 10A, FIG. 10B, and FIG. 10C, the NFC emulation card switching method may be applied to an NFC system including an electronic device 100 and an NFC card reading device 200. The electronic device 100 may be in a PICC mode. For example, the electronic device 100 is in the PICC mode by default after an NFC function is enabled. The NFC card reading device 200 may be in a PCD mode. The electronic device 100 may include but is not limited to a processor 101, an NFC module 102, a power module 105, and a storage module 107. An application 108 may run in the processor 101.

S1001: The processor 101 detects a power-off condition of the electronic device 100; the application 108 sends a first card swiping set to the storage module 107; and after receiving the first card swiping set, the storage module 107 activates a first NFC emulation card in the first card swiping set.

The processor 101 may send the first card swiping set to the storage module 107 via the application 108 after receiving power-off input of a user or after detecting, via the power module 105, that power of the electronic device 100 is less than preset power-off power. The application 108 may be an application for setting the first card swiping set. For example, the application 108 may be a wallet application or a settings application.

S1002: Power off the electronic device 100 after the application 108 sends the first card swiping set to the storage module 107; and when the electronic device 100 is powered off, the power module 105 stops supplying power to the processor 101, and supplies power to the NFC module 102 and the storage module 107.

When detecting the power-off condition, the processor 101 may control the electronic device 100 to be powered off. Specifically, the processor 101 may send a power-off instruction to the power module 105, and the power module 105 may supply power to the NFC module 102 and the storage module 107 in response to the power-off instruction.

S1003: The electronic device 100 enters a radio frequency field of the NFC card reading device 200.

When sensing the radio frequency field transmitted by the NFC card reading device 200, the NFC module 102 may determine that the electronic device 100 enters the radio frequency field of the NFC card reading device 200.

S1004: The NFC card reading device 200 sends a card search request to the NFC module 102 of the electronic device 100.

S1005: The NFC module 102 sends a card search response to the NFC card reading device 200 after receiving the card search request.

S1006: The NFC card reading device 200 sends a card data request to the NFC module 102.

The card data request is used to obtain card information of an NFC emulation card activated by the electronic device 100.

S1007: The NFC module 102 sends an obtaining request to the storage module 107 after receiving the card data request.

S1008: After receiving the obtaining request, the storage module 107 determines card information of the first NFC emulation card based on the obtaining request.

S1009: After determining the card information of the first NFC emulation card, the storage module 107 sends the card information of the first NFC emulation card to the NFC module 102.

S1010: After receiving the card information of the first NFC emulation card, the NFC module 102 sends a card data response to the NFC card reading device 200, where the card data response carries the card information of the first NFC emulation card.

S1011: The NFC card reading device 200 executes a card swiping service of the first NFC emulation card based on the card information of the first NFC emulation card.

S1012: The electronic device 100 leaves the radio frequency field of the NFC card reading device 200.

S1013: After leaving the radio frequency field of the NFC card reading device 200, the electronic device 100 enters the radio frequency field of the NFC card reading device 200.

It should be noted that, in addition to entering the radio frequency field of the NFC card reading device 200, the electronic device 100 can also switch to and activate the second NFC emulation card when entering a radio frequency field of another NFC card reading device.

S1014: The NFC card reading device 200 sends a card search request to the NFC module 102.

S1015: The NFC module 102 sends a card search response to the NFC card reading device 200 after receiving the card search request.

S1016: The NFC module 102 sends a card switching instruction to the storage module 107 after receiving the card search request.

After receiving the card search request, the NFC module 102 determines that the electronic device 100 re-enters the radio frequency field of the NFC card reading device 200, and sends the card switching instruction to the storage module 107. In this way, whether the electronic device enters the radio frequency field of the NFC card reading device 200 can be more accurately determined.

Optionally, after the card swiping service fails to be executed with the NFC card reading device 200 based on the first NFC emulation card, the NFC module 102 may receive the card search request sent by the NFC card reading device 200, and send the card switching instruction to the storage module 107. In this way, when card swiping fails, the NFC module 102 detects that the electronic device re-enters the radio frequency field of the NFC card reading device 200, and switches to a to-be-activated NFC emulation card, so that the user can select an NFC emulation card that matches the NFC card reading device 200.

Optionally, after the card swiping service is executed with the NFC card reading device 200 based on the first NFC emulation card, the NFC module 102 may receive, within preset sleep duration, the card search request sent by the NFC card reading device 200, and send the card switching instruction to the storage module 107. In this way, the NFC module 102 detects that the electronic device 100 re-enters the radio frequency field in a short period of time after leaving the radio frequency field, and determines an NFC emulation card that the user wants to switch to and activate.

Optionally, after the electronic device 100 performs step S1013, the NFC module 102 may determine, based on field strength of the NFC card reading device 200, that the electronic device 100 leaves the radio frequency field of the NFC card reading device 200 and re-enters the radio frequency field of the NFC card reading device 200, and may send the card switching instruction to the storage module 107.

S1017: The storage module 107 activates the second NFC emulation card based on the first card swiping set in response to the card switching instruction.

Specifically, for descriptions of activating the second NFC emulation card by the storage module 107, refer to the embodiment shown in FIG. 8A, FIG. 8B, and FIG. 8C. For descriptions of determining the second NFC emulation card by the storage module 107, refer to the embodiment shown in FIG. 6. Details are not described herein again.

S1018: The NFC card reading device 200 sends a card data request to the NFC module 102 after receiving the card search response.

S1019: The NFC module 102 sends an obtaining request to the storage module 107 after receiving the card data request.

S1020: The storage module 107 determines card information of the second NFC emulation card based on the obtaining request.

S1021: After receiving the obtaining request, the storage module 107 sends the card information of the second NFC emulation card to the NFC module 102.

S1022: After receiving the card information of the second NFC emulation card, the NFC module 102 sends a card data response to the NFC card reading device 200, where the card data response carries the card information of the second NFC emulation card.

Optionally, the application 108 may send the first card swiping set to the NFC module 102. After receiving the first card swiping set, the NFC module 102 notifies the storage module 107 to activate the first NFC emulation card, and the storage module 107 activates the first NFC emulation card. After receiving the card data request sent by the NFC card reading device 200, the NFC module 102 may obtain the card information of the first NFC emulation card from the storage module 107, and send the card information of the first NFC emulation card to the NFC card reading device 200. When detecting that the electronic device 100 re-enters the radio frequency field of the NFC card reading device 200 (for example, receiving the card search request in step S1014), the NFC module 102 may determine the second NFC emulation card based on the first card swiping set, and notify the storage module 107 to activate the second NFC emulation card. After the storage module 107 activates the second NFC emulation card, the NFC module 102 may obtain the card information of the second NFC emulation card from the storage module 107 after receiving the card data request from the NFC card reading device 200, and send the card information of the second NFC emulation card to the NFC card reading device 200. In this way, the NFC module 102 can determine the to-be-activated NFC emulation card based on the first card swiping set.

S1023: The NFC card reading device 200 executes a card swiping service of the second NFC emulation card based on the card information of the second NFC emulation card.

For descriptions of some steps shown in FIG. 10A, FIG. 10B, and FIG. 10C, refer to the embodiment shown in FIG. 8A, FIG. 8B, and FIG. 8C. Details are not described herein again.

In this way, the electronic device 100 can implement, via the modules, that after the electronic device 100 is powered off, the user can also switch the NFC emulation card by moving a location of the electronic device 100, so that the user selects a desired NFC emulation card. This is applicable to a plurality of different card swiping scenarios.

In a possible implementation, after being powered off, the electronic device 100 may activate the first NFC emulation card in the first card swiping set when entering the radio frequency field of the NFC card reading device 200. After leaving the radio frequency field of the NFC card reading device 200, when detecting that the electronic device 100 enters the radio frequency field of the NFC card reading device (for example, the NFC card reading device 200), the electronic device 100 may switch to and activate the second NFC emulation card.

In a possible implementation, the electronic device 100 activates the first NFC emulation card. The electronic device 100 enters, at a moment t1, the radio frequency field transmitted by the NFC card reading device 200. After entering the radio frequency field of the NFC card reading device 200, the electronic device 100 may execute the card swiping service with the NFC card reading device 200 based on the first NFC emulation card. When detecting, via the storage module 107 at a moment t2, that a time difference between the moment t2 and the moment t1 reaches a preset time difference, the electronic device 100 may switch to and activate the second NFC emulation card. The electronic device 100 may execute the card swiping service with the NFC card reading device 200 based on the second NFC emulation card. Then, when being in the radio frequency field of the NFC card reading device 200, the electronic device 100 may switch to and activate an NFC emulation card in the first NFC card swiping set at an interval of the preset time difference. In this way, the user can place the electronic device 100 close to the NFC card reading device 200, and the electronic device 100 can sequentially execute card swiping services with the NFC card reading device 200 based on a plurality of NFC emulation cards, to implement an NFC emulation card switching operation, thereby increasing a probability that the electronic device 100 successfully performs card swiping on the NFC card reading device 200.

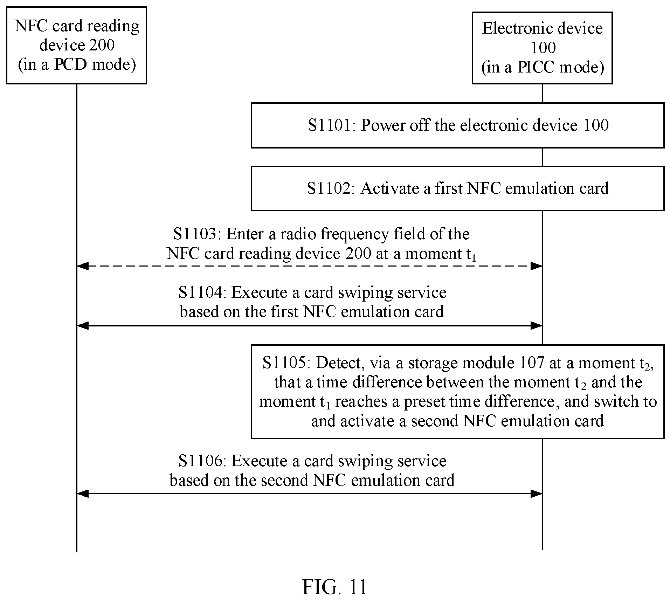

For example, as shown in FIG. 11, the NFC emulation card switching method includes the following steps.

S1101: Power off an electronic device 100.

In some examples, when detecting a power-off condition of the electronic device 100, the electronic device 100 may display prompt information 95. The prompt information 95 may be used to prompt a user that the electronic device 100 may switch to a to-be-activated NFC emulation card at an interval of a preset time difference after being placed close to a card swiping area of an NFC card reading device 200. This can help the user learn that the electronic device 100 can automatically switch the NFC emulation card after being powered off, and can help the user determine waiting duration for switching to a desired NFC emulation card.

Optionally, when detecting the power-off condition of the electronic device 100, the electronic device 100 may display prompt information 96. The prompt information 96 may be used to prompt the user to continuously place the electronic device 100 close to the card swiping area of the NFC card reading device 200 when card swiping is performed via the electronic device 100. In this way, because the electronic device 100 automatically switches an NFC emulation card at an interval of the preset time difference, if the user moves the electronic device 100 away from the card swiping area of the NFC card reading device 200, when the electronic device 100 switches to an NFC emulation card that matches the NFC card reading device 200, the electronic device 100 may not in a radio frequency field of the NFC card reading device 200, and card swiping may fail.

S1102: The electronic device 100 activates a first NFC emulation card.

S1103: The electronic device 100 enters the radio frequency field of the NFC card reading device 200 at a moment t1.

The NFC card reading device 200 may operate in a PCD mode. The electronic device 100 may operate in a PICC mode after being powered off.

S1104: The electronic device 100 executes a card swiping service with the NFC card reading device 200 based on the first NFC emulation card.

The electronic device 100 may send card information of the first NFC emulation card to the NFC card reading device 200 through NFC data exchange. The NFC card reading device 200 may execute the card swiping service of the first NFC emulation card based on the card information of the first NFC emulation card.

S1105: The electronic device 100 detects, via a storage module 107 at a moment t2, that a time difference between the moment t2 and the moment t1 reaches a preset time difference, and switches to and activates a second NFC emulation card.

When detecting that the electronic device enters the radio frequency field of the NFC card reading device 200, the electronic device 100 may record, via the storage module 107, the moment t1 of entering the radio frequency field. Then, the electronic device 100 may perform timing via the storage module 107. When determining that the time difference between the current moment t2 and the moment t1 reaches the preset time difference, the electronic device 100 switches to and activates the second NFC emulation card.

In some other examples, after detecting, at the moment t2, that the time difference between the moment t2 and the moment t1 reaches the preset time difference, and determining that the electronic device 100 fails to execute the card swiping service based on the first NFC emulation card, the electronic device 100 determines that a specified switching condition is met, and switches to and activates the second NFC emulation card. When successfully executing the card swiping service based on the first NFC emulation card, the NFC card reading device 200 determines that the specified switching condition is not met, and activates the first NFC emulation card. In this way, when successfully performing card swiping based on the first NFC emulation card, the electronic device 100 may not switch to a to-be-activated NFC emulation card, and may continue to use the first NFC emulation card. When using the same NFC card reading device repeatedly, the user can perform card swiping more quickly. It may be understood that, when entering the radio frequency field of the NFC card reading device 200 and before successfully performing card swiping, the electronic device 100 may switch to and activate an NFC emulation card in a first card swiping set at an interval of the preset time difference. The electronic device 100 no longer switches the NFC emulation card after successful card swiping. Optionally, if the electronic device 100 fails to perform card swiping after switching to and activating all NFC emulation cards in the first card swiping set, the electronic device 100 stops switching the NFC emulation cards. When receiving a successful card swiping result that is sent by the NFC card reading device 200 and that indicates that card swiping succeeds, the electronic device 100 may determine that card swiping succeeds.

In some other examples, the first card swiping set may represent a card swiping sequence of the plurality of NFC emulation cards. After activating the first NFC emulation card that ranks first in the first card swiping set, and when detecting, within preset sleep duration, that a time difference between the current moment and a moment of activating the first NFC emulation card reaches the preset time difference, the electronic device 100 switches to and activates the second NFC emulation card that ranks second in the first card swiping set. After activating the first NFC emulation card that ranks first in the first card swiping set, the electronic device 100 re-enters the radio frequency field of the NFC card reading device (for example, the NFC card reading device 200) after preset sleep duration, and activates the first NFC emulation card. In this way, when the user does not swipe a card via the electronic device 100 for a long period of time, when entering the radio frequency field of the NFC card reading device 200, the electronic device 100 can activate the NFC emulation card that ranks first in the first card swiping set, so that the user determines the card swiping sequence of the plurality of NFC emulation cards in the first card swiping set, and quickly switches to a to-be-used NFC emulation card.

S1106: The electronic device 100 executes a card swiping service with the NFC card reading device 200 based on the second NFC emulation card.

The electronic device 100 may send card information of the second NFC emulation card to the NFC card reading device 200 through NFC data exchange. The NFC card reading device 200 may execute the card swiping service of the second NFC emulation card based on the card information of the second NFC emulation card.

It may be understood that, if the first card swiping set includes the first NFC emulation card, the second NFC emulation card, and a third NFC emulation card, after activating the second NFC emulation card and when detecting that a time difference between a current moment and a moment of activating the second NFC emulation card reaches the preset time difference, the electronic device 100 can switch to and activate the third NFC emulation card in the first card swiping set.

In some other examples, step S1101 is an optional step. After being powered on, the electronic device 100 may also perform step S1102 to step S1106 when an NFC function is enabled and the electronic device operates in the PICC mode. In this way, the user does not need to gaze at a display of the electronic device 100, and can also switch, by using the steps shown in FIG. 11, the NFC emulation card activated by the electronic device 100.

The following describes, with reference to the hardware structure of the electronic device 100 shown in FIG. 3A, the NFC emulation card switching method provided in embodiments of this application.

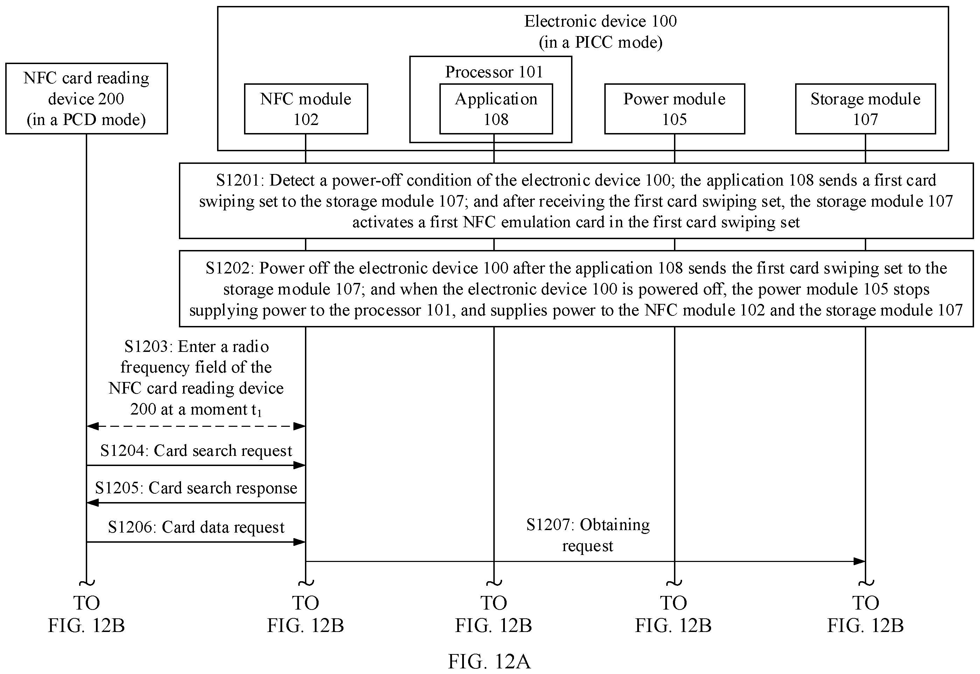

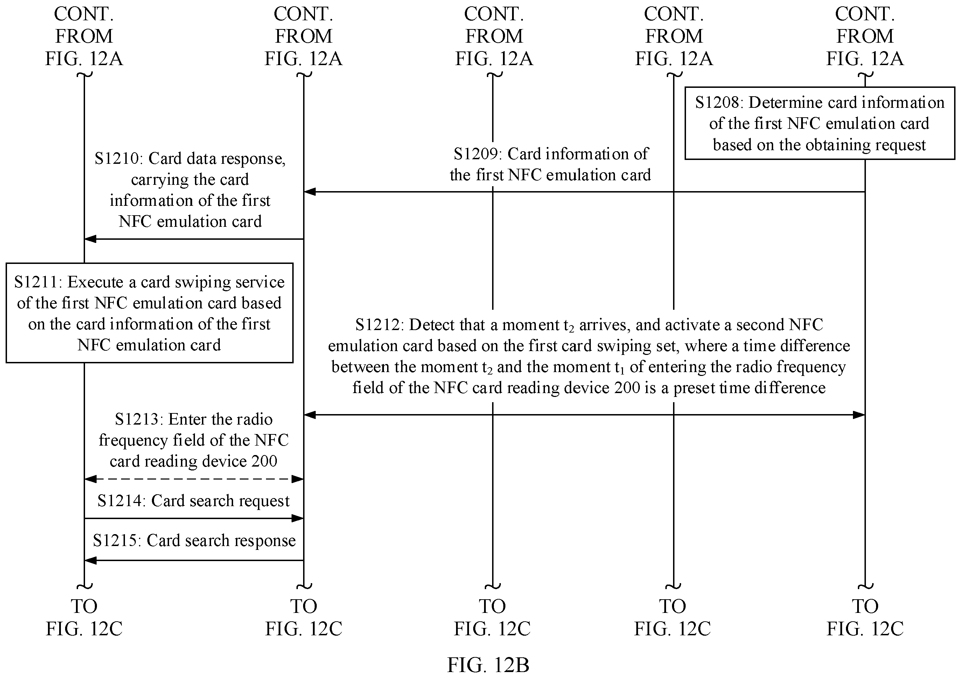

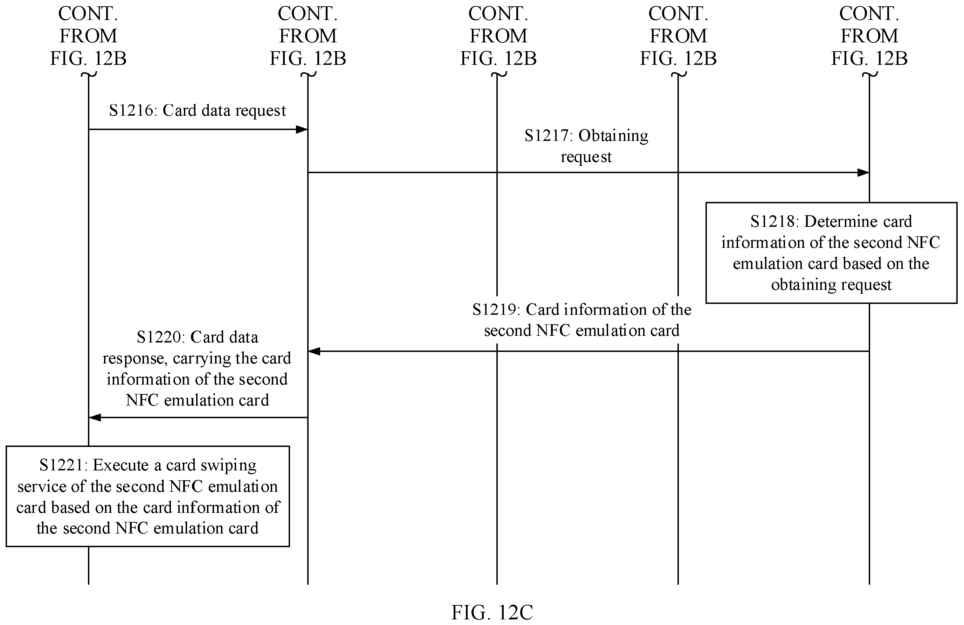

For example, as shown in FIG. 12A, FIG. 12B, and FIG. 12C, the NFC emulation card switching method may be applied to an NFC system including an electronic device 100 and an NFC card reading device 200. The electronic device 100 may be in a PICC mode. For example, the electronic device 100 is in the PICC mode by default after an NFC function is enabled. The NFC card reading device 200 may be in a PCD mode. The electronic device 100 may include but is not limited to a processor 101, an NFC module 102, a power module 105, and a storage module 107. An application 108 may run in the processor 101.

S1201: The processor 101 detects a power-off condition of the electronic device 100; the application 108 sends a first card swiping set to the storage module 107; and after receiving the first card swiping set, the storage module 107 activates a first NFC emulation card in the first card swiping set.

The processor 101 may send the first card swiping set to the storage module 107 via the application 108 after receiving power-off input of a user or after detecting, via the power module 105, that power of the electronic device 100 is less than preset power-off power. The application 108 may be an application for setting the first card swiping set. For example, the application 108 may be a wallet application or a settings application.

S1202: Power off the electronic device 100 after the application 108 sends the first card swiping set to the storage module 107; and when the electronic device 100 is powered off, the power module 105 stops supplying power to the processor 101, and supplies power to the NFC module 102 and the storage module 107.

S1203: The electronic device 100 enters a radio frequency field of the NFC card reading device 200 at a moment t1.

For descriptions of detecting, by the electronic device 100, whether the electronic device enters the radio frequency field of the NFC card reading device 200, refer to the embodiments shown in FIG. 9 to FIG. 10C. Details are not described herein again.

S1204: The NFC card reading device 200 sends a card search request to the NFC module 102 of the electronic device 100.

S1205: The NFC module 102 sends a card search response to the NFC card reading device 200 after receiving the card search request.

S1206: The NFC card reading device 200 sends a card data request to the NFC module 102.

The card data request is used to obtain card information of an NFC emulation card activated by the electronic device 100.

S1207: The NFC module 102 sends an obtaining request to the storage module 107 after receiving the card data request.

S1208: After receiving the obtaining request, the storage module 107 determines card information of the first NFC emulation card based on the obtaining request.

S1209: After determining the card information of the first NFC emulation card, the storage module 107 sends the card information of the first NFC emulation card to the NFC module 102.

S1210: After receiving the card information of the first NFC emulation card, the NFC module 102 sends a card data response to the NFC card reading device 200, where the card data response carries the card information of the first NFC emulation card.

S1211: The NFC card reading device 200 executes a card swiping service of the first NFC emulation card based on the card information of the first NFC emulation card.

S1212: The storage module 107 detects that a moment t2 arrives, and activates a second NFC emulation card based on the first card swiping set, where a time difference between the moment t2 and the moment t1 of entering the radio frequency field of the NFC card reading device 200 is a preset time difference.

The NFC module 102 may notify the storage module 107 when detecting that the electronic device 100 enters the radio frequency field of the NFC card reading device 200. The storage module 107 may record the moment t1 at which the electronic device 100 enters the radio frequency field of the NFC card reading device 200. After recording the moment t1, the storage module 107 may switch to and activate an NFC emulation card based on the first card swiping set at an interval of the preset time difference.

Optionally, when receiving the obtaining request sent by the NFC module 102, the storage module 107 may record the moment t1 of receiving the obtaining request. After recording the moment t1, the storage module 107 may switch to and activate an NFC emulation card based on the first card swiping set at an interval of the preset time difference. In this way, the storage module 107 can reuse the obtaining request, and the NFC module 102 does not need to notify, based on another instruction, the storage module 102 that the electronic device 100 enters the radio frequency field of the NFC card reading device 200.

The NFC module 102 may notify the storage module 107 when detecting that the electronic device 100 leaves the radio frequency field of the NFC card reading device 200. The storage module 107 may stop timing. Optionally, the storage module 107 may further activate the first NFC emulation card. In this way, after leaving the radio frequency field of the NFC card reading device 200, the electronic device 100 no longer switches to a to-be-activated NFC emulation card.

In some examples, after switching to and activating a last NFC emulation card in the first card swiping set, the storage module 107 may stop switching the activated NFC emulation card. Optionally, after the electronic device 100 executes a card swiping service with the NFC card reading device 200 based on the last NFC emulation card in the first card swiping set, the storage module 107 may further activate the first NFC emulation card. In this way, after executing card swiping services with the NFC card reading device in the radio frequency field of the NFC card reading device 200 based on all NFC emulation cards in the first card swiping set, the electronic device 100 activates the first NFC emulation card, and no longer switches the activated NFC emulation card.

For descriptions of determining the second NFC emulation card by the storage module 107, refer to the embodiments shown in FIG. 11 and FIG. 6. Details are not described herein again.

Optionally, after the card swiping service fails to be executed with the NFC card reading device 200 based on the first NFC emulation card, the NFC module 102 may send a card switching instruction to the storage module 107. For example, the card switching instruction may be an unsuccessful card swiping result indicating that card swiping based on the first NFC emulation card fails. When receiving the card switching instruction sent by the NFC module 102 and detecting that the time difference between the current moment t2 and the moment t1 reaches the preset time difference, the storage module 107 switches to and activates the second NFC emulation card. In this way, when failing to perform card swiping and detecting that a time from a moment of activating the first NFC emulation card reaches the preset time difference, the electronic device 100 switches to a to-be-activated NFC emulation card, so that the electronic device 100 can switch to an NFC emulation card that matches the NFC card reading device 200.

Optionally, when the first card swiping set represents a card swiping sequence of the plurality of NFC emulation cards, the electronic device 100 activates the first NFC emulation card after leaving the radio frequency field of the NFC card reading device 200. In this way, after the electronic device 100 leaves the radio frequency field of the NFC card reading device 200, it may indicate that the user wants to start card swiping from the first NFC emulation card that ranks first. Therefore, the first NFC emulation card activated by the electronic device 100 is more likely to be an NFC emulation card that matches an NFC card reading device.

Optionally, the storage module 107 may switch to a to-be-activated NFC emulation card at an interval of the preset time difference within preset sleep duration since the electronic device enters the radio frequency field of the NFC card reading device 200. It may be understood that the storage module 107 may activate the first NFC emulation card when the electronic device enters a radio frequency field of an NFC card reading device after the preset sleep duration since the electronic device enters the radio frequency field of the NFC card reading device 200. In this way, if the electronic device 100 does not activate an NFC emulation card that matches the NFC card reading device 200, a case in which the electronic device 100 continuously switches between NFC emulation cards does not occur.

S1213: The electronic device 100 enters the radio frequency field of the NFC card reading device 200.

It should be noted that, in addition to entering the radio frequency field of the NFC card reading device 200, the electronic device may also enter a radio frequency field of another NFC card reading device. It should be further noted that step S1213 is an optional step, and the electronic device 100 may be always in the radio frequency field of the NFC card reading device 200 after step S1203.

S1214: The NFC card reading device 200 sends a card search request to the NFC module 102.

S1215: The NFC module 102 sends a card search response to the NFC card reading device 200 after receiving the card search request.

S1216: The NFC card reading device 200 sends a card data request to the NFC module 102 after receiving the card search response.

S1217: The NFC module 102 sends an obtaining request to the storage module 107 after receiving the card data request.

S1218: The storage module 107 determines card information of the second NFC emulation card based on the obtaining request.

S1219: After receiving the obtaining request, the storage module 107 sends the card information of the second NFC emulation card to the NFC module 102.

S1220: After receiving the card information of the second NFC emulation card, the NFC module 102 sends a card data response to the NFC card reading device 200, where the card data response carries the card information of the second NFC emulation card.

Optionally, the application 108 may send the first card swiping set to the NFC module 102. After receiving the first card swiping set, the NFC module 102 notifies the storage module 107 to activate the first NFC emulation card, and the storage module 107 activates the first NFC emulation card. The NFC module 102 may record the moment t1 when detecting that the electronic device enters the radio frequency field of the NFC card reading device 200. After receiving the card data request sent by the NFC card reading device 200, the NFC module 102 may obtain the card information of the first NFC emulation card from the storage module 107, and send the card information of the first NFC emulation card to the NFC card reading device 200. The NFC module 102 may further determine the second NFC emulation card based on the first card swiping set when detecting that the time difference between the current moment t2 and the moment t1 reaches the preset time difference. After determining the second NFC emulation card, the NFC module 102 may notify the storage module 107 to activate the second NFC emulation card. After the storage module 107 activates the second NFC emulation card, the NFC module 102 may obtain the card information of the second NFC emulation card after receiving the card data request from the NFC card reading device 200, and send the card information of the second NFC emulation card to the NFC card reading device 200. In this way, the NFC module 102 can determine the to-be-activated NFC emulation card based on the first card swiping set.

S1221: The NFC card reading device 200 executes a card swiping service of the second NFC emulation card based on the card information of the second NFC emulation card.

For descriptions of some steps shown in FIG. 12A, FIG. 12B, and FIG. 12C, refer to the embodiment shown in FIG. 8A, FIG. 8B, and FIG. 8C. Details are not described herein again.

In this way, the electronic device 100 can implement, via the modules, that after the electronic device 100 is powered off, the user may also place the electronic device 100 close to the NFC card reading device 200 to wait for the electronic device 100 to automatically switch the NFC emulation card, so that the user successfully performs card swiping on the NFC card reading device 200 via the electronic device 100. This is applicable to a plurality of different card swiping scenarios. In addition, the user can roughly determine, based on the preset time difference and the quantity of NFC emulation cards in the first card swiping set, whether to switch to an NFC emulation card that matches the NFC card reading device 200.

In a possible implementation, the electronic device 100 may display a setting interface. The setting interface includes a card option (including a card option of a first NFC emulation card and a card option of a second NFC emulation card) corresponding to an activated NFC emulation card of the electronic device 100. The electronic device 100 may receive input of selecting the card option of the first NFC emulation card and the card option of the second NFC emulation card by a user, and add the first NFC emulation card and the second NFC emulation card to a first card swiping set. In this way, the user can set the first card swiping set via the setting interface, so that the user can add a desired NFC emulation card to the first card swiping set.

For example, the electronic device 100 displays a cards interface 530 shown in FIG. 5C. After receiving input of the user for a control 532, the electronic device 100 may display, in response to the input, a pop-up window 1301 shown in FIG. 13A.

As shown in FIG. 13A, the pop-up window 1301 includes one or more function controls. The one or more function controls include a function control 1302. The function control 1302 may be used to trigger the electronic device 100 to display an interface for setting an NFC function. For example, the function control 1302 may include text prompt information "NFC setting".

After receiving input of the user for the function control 1302, the electronic device 100 may display, in response to the input, a setting interface 1310 shown in FIG. 13B. As shown in FIG. 13B, the setting interface 1310 includes a setting option 1311 "Switch the NFC emulation card after power-off".

Optionally, the setting interface 1310 may further include but is not limited to one or more of a card swiping sound effect setting option, a payment password setting option, and a payment verification method setting option. The card swiping sound effect setting option may be used to trigger the electronic device 100 to display an interface for setting prompt sound effect indicating that card swiping succeeds. The payment password setting option may be used to trigger the electronic device 100 to display an interface for setting a payment password. The payment verification method setting option may be used to trigger the electronic device 100 to display an interface for setting a payment mode.

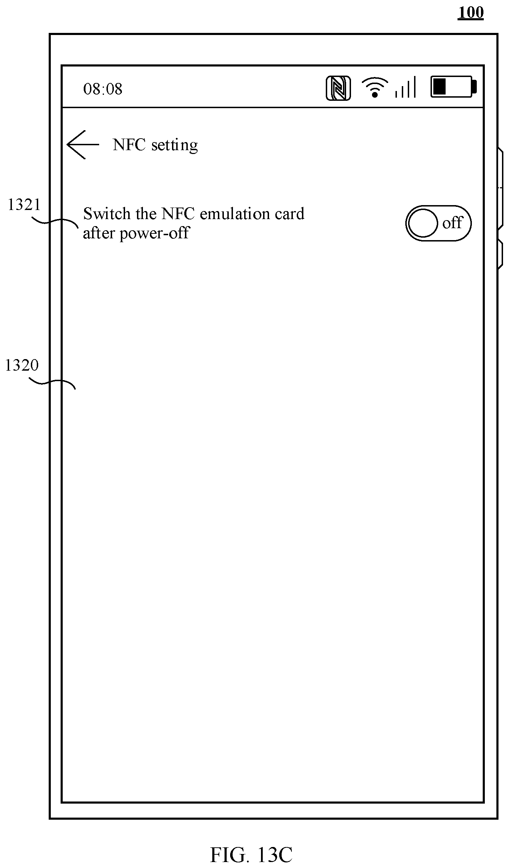

After receiving input of the user for the setting option 1311 "Switch the NFC emulation card after power-off", the electronic device 100 may display, in response to the input, a setting interface 1320 shown in FIG. 13C. As shown in FIG. 13C, the setting interface 1320 includes an on/off control 1321. The on/off control 1321 may include an on state and an off state. The on/off control 1321 may be used to trigger the electronic device 100 to receive and respond to input (for example, a tap) of the user to switch a state of the on/off control. When the on/off control is in the on state, the electronic device 100 enables the function "Switch the NFC emulation card after power-off". After the electronic device 100 is powered off, the user can switch an NFC emulation card on the electronic device 100 by using the NFC emulation card switching method provided in embodiments of this application. When the on/off control is in the off state, the electronic device 100 disables the function "Switch the NFC emulation card after power-off". The user cannot switch an NFC emulation card on the electronic device 100 after the electronic device 100 is powered off.

Optionally, the setting interface 1320 shown in FIG. 13C may further include but is not limited to an on/off control 1331 (not shown in the figure). The on/off control 1331 may be used to set whether the electronic device 100 enables a function of switching to a to-be-activated NFC emulation card when it is determined that a specified switching condition is met after power-on. When the on/off control 1331 is in an on state, the electronic device 100 enables the function of switching the NFC emulation card after power-on; and after being powered on, the electronic device 100 can switch to the to-be-activated NFC emulation card when it is determined that the specified switching condition is met. When the on/off control 1331 is in an off state, the electronic device 100 disables the function of switching the NFC emulation card after power-on; and after being powered on, the electronic device 100 cannot switch to the to-be-activated NFC emulation card when it is determined that the specified switching condition is met.

Optionally, the setting interface 1320 shown in FIG. 13C may further include but is not limited to an on/off control 1332 (not shown in the figure). The on/off control 1332 may be used to set whether the electronic device 100 enables setting a default NFC emulation card. When the on/off control 1332 is in an on state, the electronic device 100 sets the default NFC emulation card, and the electronic device 100 can activate the default NFC emulation card. When the on/off control 1332 is in an off state, the electronic device 100 cancels setting the default NFC emulation card. It may be understood that, when the electronic device 100 enables the default NFC emulation card, the electronic device cannot switch to a to-be-activated NFC emulation card by using the NFC emulation card switching method provided in embodiments of this application.

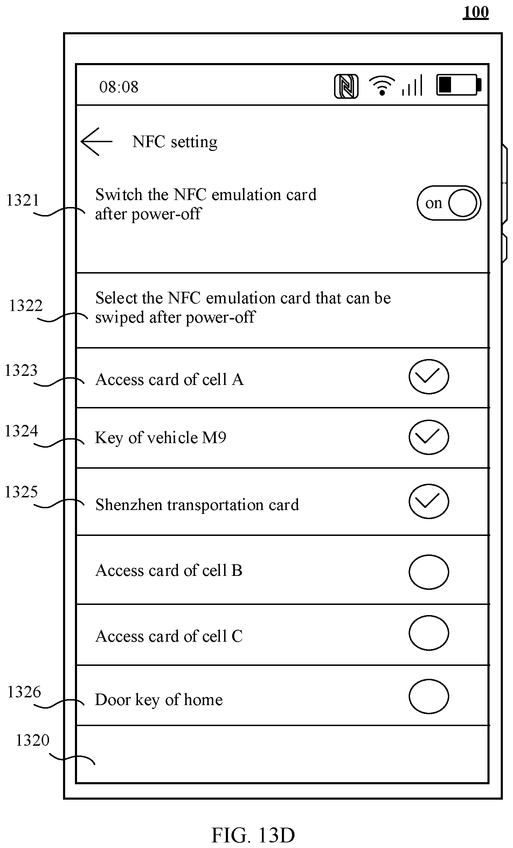

After receiving input of the user for the on/off control 1321, the electronic device 100 may display, in response to the input, a setting interface 1320 shown in FIG. 13D.

As shown in FIG. 13D, the on/off control 1321 in the setting interface 1320 is in an on state. The setting interface 1320 further includes one or more NFC emulation card options and prompt information 1322. The prompt information 1322 may be used to prompt the user of "Select the NFC emulation card to be swiped after power-on". The one or more NFC emulation card options include an NFC emulation card option 1323, an NFC emulation card option 1324, an NFC emulation card option 1325, and an NFC emulation card option 1326.

The NFC emulation card option 1323, the NFC emulation card option 1324, and the NFC emulation card option 1325 are in a selected state. The first card swiping set of the electronic device 100 includes NFC emulation cards: an access card of cell A, a key of vehicle M9, and a Shenzhen transportation card, that correspond to the three NFC emulation card options. The NFC emulation card option 1326 is in an unselected state. The first card swiping set does not include a door key of home corresponding to the NFC emulation card option 1326. The electronic device 100 may determine a to-be-activated NFC emulation card from the first card swiping set after being powered off. For details, refer to the embodiments shown in FIG. 6 to FIG. 12C.

In some examples, the setting interface 1320 shown in FIG. 13D may further display the prompt information 61 and/or the prompt information 62. In this way, the setting interface 1320 may be used to prompt the user that an NFC emulation card can be switched after power-off, and may further prompt the user how to switch the NFC emulation card after power-off.

In some examples, the setting interface 1320 shown in FIG. 13D may further display the prompt information 71, the prompt information 91, or the prompt information 95. Optionally, the setting interface 1320 may further display the prompt information 95 and the prompt information 96.

In some examples, the first card swiping set of the electronic device 100 may represent a card swiping sequence of NFC emulation cards. The electronic device 100 may receive input of the user, and adjust the card swiping sequence of the NFC emulation cards in the first card swiping set. In this way, after the electronic device 100 is powered off, when it is determined that the specified switching condition is met, the electronic device may sequentially activate the NFC emulation cards in the first card swiping set in the card swiping sequence represented by the first card swiping set, so that the user learns of the NFC emulation card currently activated by the electronic device 100.

For example, the electronic device 100 displays the setting interface 1320 shown in FIG. 13D. In the setting interface 1320 shown in FIG. 13D, in the first card swiping set, the access card of cell A ranks first, the key of vehicle M9 ranks second, and the Shenzhen transportation card ranks third. It may be understood that, when the electronic device 100 activates the Shenzhen transportation card, and detects that the specified switching condition is met, the electronic device 100 may switch to and activate the access card of cell A. The rest may be deduced by analogy.

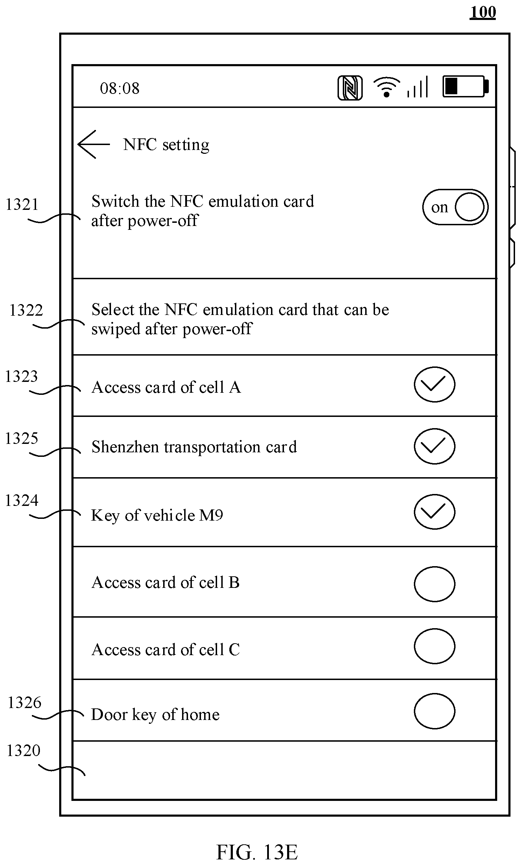

After receiving drag input of the user for the NFC emulation card option 1325, the electronic device 100 may display, in response to the drag input, a setting interface 1320 shown in FIG. 13E.

As shown in FIG. 13E, the NFC emulation card option 1325 is located below the NFC emulation card option 1323 and above the NFC emulation card option 1324. States of NFC emulation card options shown in FIG. 13E may represent that, in the first card swiping set, the access card of cell A ranks first, the Shenzhen transportation card ranks second, and the key of vehicle M9 ranks third.

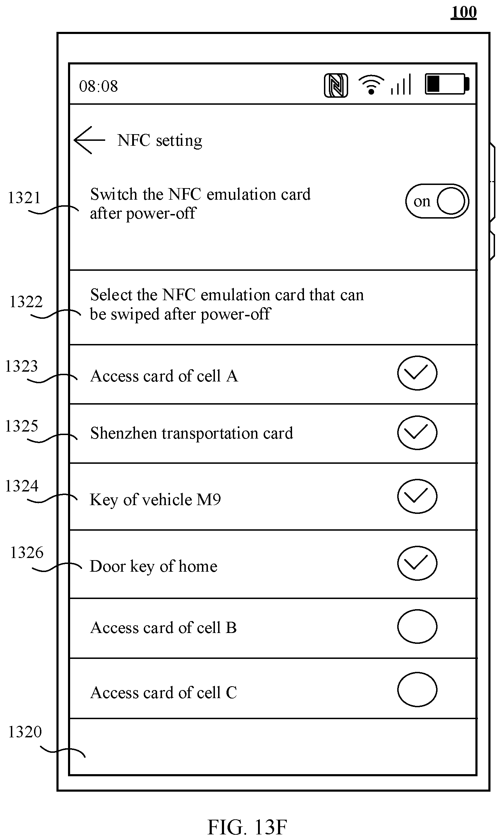

After receiving input (for example, a tap) of the user for the NFC emulation card option 1326 shown in FIG. 13E, the electronic device 100 may display, in response to the input, a setting interface 1320 shown in FIG. 13F. As shown in FIG. 13F, the NFC emulation card option 1326 is in a selected state, and may represent that the first card swiping set of the electronic device 100 includes the access card of cell A, the key of vehicle M9, the Shenzhen transportation card, and the door key of home. States of NFC emulation card options shown in FIG. 13F may further represent that, in the first card swiping set, the access card of cell A ranks first, the Shenzhen transportation card ranks second, the key of vehicle M9 ranks third, and the door key of home ranks fourth.

It should be noted that, in some examples, the preset time difference may be referred to as a first time difference, the specified button may be referred to as a first button, the specified input may be referred to as first input, the preset field strength 2 may be referred to as first field strength, the preset field strength 1 may be referred to as second field strength, and the preset sleep duration may be referred to as first duration.

In a possible implementation, the electronic device 100 is provided with a default NFC emulation card, and the default NFC emulation card is a first NFC emulation card. A first card swiping set includes a second NFC emulation card. The electronic device 100 activates the first NFC emulation card. After being powered off, the electronic device 100 continues to activate the first NFC emulation card. After a card swiping service of the first NFC emulation card fails to be executed with the NFC card reading device 200, when a specified switching condition is met, the electronic device 100 switches to and activates the second NFC emulation card in the first card swiping set. Optionally, the first card swiping set includes the first NFC emulation card. The first card swiping set may be input by the user, or may be determined based on a use record such as a type of an NFC emulation card (for example, an access card, a transportation card, or a key card) or a historical frequency of using the NFC emulation card by the user. In this way, when the electronic device 100 is provided with the default NFC emulation card, the default NFC emulation card may be activated for a long period of time. After being powered off, the electronic device 100 may first execute a card swiping service based on the default NFC emulation card. After failing to execute the card swiping service based on the default NFC emulation card, the electronic device 100 may switch to and activate an NFC emulation card in the first NFC card swiping set, so that the user can use more than one NFC emulation card after power-off. This is applicable to more card swiping scenarios.

In a possible implementation, if the default NFC emulation card disposed on the electronic device 100 is an NFC emulation card that supports an application layer protocol, and if a target NFC emulation card that matches the NFC card reading device 200 is an NFC emulation card that supports the application layer protocol, after the electronic device 100 is powered off, when receiving an applet select command sent by the NFC card reading device 200, the electronic device may determine, based on an identifier of an applet carried in the applet select command, the target NFC emulation card that matches the NFC card reading device 200. In some examples, the target NFC emulation card is a default NFC emulation card. In this way, when the default NFC emulation card activated by the electronic device 100 supports the application layer protocol, when performing signaling exchange with the NFC card reading device 200 at an application layer, the electronic device may switch to and activate the target NFC emulation card that matches the NFC card reading device 200, thereby reducing a frequency of switching to and activating an NFC emulation card by the electronic device 100, and improving card swiping efficiency.

If a target NFC emulation card that matches the NFC card reading device 200 is an NFC emulation card that does not support the application layer protocol, after being powered off, the electronic device 100 may switch, by using the NFC emulation card switching method shown in FIG. 6, an NFC emulation card activated by the electronic device 100. In this way, when the target NFC emulation card corresponding to the NFC card reading device 200 does not support the application layer protocol, the electronic device 100 cannot determine, based on an identifier of an applet, the target NFC emulation card that matches the NFC card reading device 200. The electronic device 100 may switch to and activate an NFC emulation card in the first card swiping set by using the NFC emulation card switching method, so that the electronic device 100 can also switch to a to-be-activated NFC emulation card after being powered off, thereby increasing a probability of successfully performing card swiping on the NFC card reading device 200.

If the default NFC emulation card set disposed on the electronic device 100 is an NFC emulation card that does not support an application layer protocol, and if a target NFC emulation card that matches the NFC card reading device 200 is an NFC emulation card that supports the application layer protocol, after being powered off, the electronic device 100 may switch, by using the NFC emulation card switching method shown in FIG. 6, an NFC emulation card activated by the electronic device 100. In this way, when activating the default NFC emulation card, the electronic device 100 cannot perform a signaling exchange procedure at an application layer. The electronic device 100 can switch the activated NFC emulation card by using the NFC emulation card switching method, so that, when the target NFC emulation card is activated, the electronic device 100 can switch to and activate the target NFC emulation card, and successfully perform card swiping on the NFC card reading device 200. In some examples, when a to-be-activated NFC emulation card to which the electronic device 100 switches is an NFC emulation card that supports the application layer protocol, when receiving an applet select command sent by the NFC card reading device 200, the electronic device 100 may determine, based on an identifier of an applet carried in the applet select command, the target NFC emulation card that matches the NFC card reading device 200. In this way, after switching to and activating the NFC emulation card that supports the application layer protocol, the electronic device 100 can perform a signaling exchange procedure with the NFC card reading device 200 at an application layer. In this process, the electronic device 100 can receive the identifier of the applet sent by the NFC card reading device 200, and activate, based on the identifier, the target NFC emulation card that matches the NFC card reading device 200.

If the default NFC emulation card set disposed on the electronic device 100 is an NFC emulation card that does not support an application layer protocol, and if a target NFC emulation card that matches the NFC card reading device 200 is an NFC emulation card that does not support the application layer protocol, after being powered off, the electronic device 100 may switch, by using the NFC emulation card switching method shown in FIG. 6, an NFC emulation card activated by the electronic device 100. In this way, if the NFC card reading device 200 does not support a signaling exchange procedure at an application layer, the electronic device 100 can also switch to and activate the target NFC emulation card by using the NFC emulation card switching method, provided that the electronic device 100 activates the target NFC emulation card.

The following describes another hardware structure of an electronic device 100 provided in embodiments of this application.

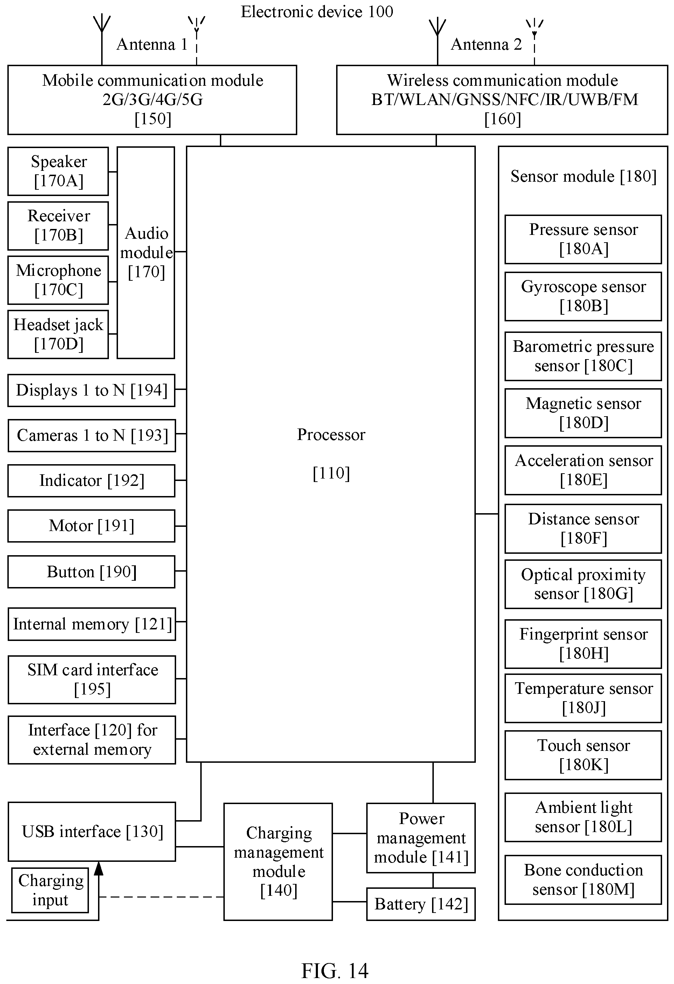

FIG. 14 is a diagram of a hardware structure of an electronic device 100 according to an embodiment of this application.

The following specifically describes this embodiment by using the electronic device 100 as an example. It should be understood that the electronic device 100 shown in FIG. 14 is merely an example, and the electronic device 100 may have more or fewer components than those shown in FIG. 14, or may combine two or more components, or may have different component configurations. Various components shown in FIG. 14 may be implemented in hardware including one or more signal processing and/or application-specific integrated circuits, software, or a combination of hardware and software.

The electronic device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include one or more of a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in embodiments of this application does not constitute a specific limitation on the electronic device 100. In some other embodiments of this application, the electronic device 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors. The controller may generate an operation control signal based on instruction operation code and a timing signal, to complete control of instruction fetching and instruction execution. A memory may be further disposed in the processor 110, and is configured to store instructions and data. In some embodiments, the memory in the processor 110 is a cache. The memory may store instructions or data recently used or cyclically used by the processor 110. If the processor 110 needs to use the instructions or the data again, the processor may directly invoke the instructions or the data from the memory. This avoids repeated access, and shortens a waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that an interface connection relationship between the modules illustrated in embodiments of this application is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive charging input from a charger. The power management module 141 is configured to connect the battery 142, the charging management module 140, and the processor 110. The power management module 141 receives input of the battery 142 and/or the charging management module 140, to supply power to the processor 110, the internal memory 121, an external memory, the display 194, the camera 193, the wireless communication module 160, and the like.

A wireless communication function of the electronic device 100 may be implemented through the antenna 1, the antenna 2, the mobile communication module 150, the wireless communication module 160, the modem processor, the baseband processor, and the like. The antenna 1 and the antenna 2 are configured to transmit and receive an electromagnetic wave signal. Each antenna in the electronic device 100 may be configured to cover one or more communication bands. Different antennas may also be reused to increase antenna utilization. For example, the antenna 1 may be reused as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 and at least some modules of the processor 110 may be disposed in a same component.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert the signal into an electromagnetic wave through the antenna 2 for radiation.

In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (Beidou navigation satellite system, BDS), a quasi-zenith satellite system (quasi-zenith satellite system, QZSS), and/or a satellite based augmentation system (satellite based augmentation system, SBAS).

The electronic device 100 may implement a display function through the GPU, the display 194, the application processor, and the like. The GPU is a microprocessor for image processing, and is connected to the display 194 and the application processor. The GPU is configured to perform mathematical and geometric calculation, and is configured to render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD). The display panel may alternatively be an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The electronic device 100 may implement a photographing function through the ISP, the camera 193, the video codec, the GPU, the display 194, the application processor, and the like.

The interface 120 for external memory may be configured to connect to an external memory card, for example, a micro SD card, to extend a storage capability of the electronic device 100. The internal memory 121 may be configured to store computer-executable program code. The executable program code includes instructions. The processor 110 runs the instructions stored in the internal memory 121, to perform various function applications and data processing of the electronic device 100. The internal memory 121 may include a program storage area and a data storage area. The program storage area may store an operating system, an application required by at least one function (for example, a sound playing function or an image playing function), and the like. The data storage area may store data (such as audio data and an address book) created during use of the electronic device 100, and the like. In addition, the internal memory 121 may include a high-speed random access memory, or may include a nonvolatile memory, for example, at least one magnetic disk storage device, a flash memory, or a universal flash storage (universal flash storage, UFS).

The electronic device 100 may implement an audio function, for example, music playing and recording, through the audio module 170, the speaker 170A, the receiver 170B, the microphone 170C, the headset jack 170D, the application processor, and the like.

The pressure sensor 180A is configured to sense a pressure signal, and may convert the pressure signal into an electrical signal. The gyroscope sensor 180B may be configured to determine a motion posture of the electronic device 100. The barometric pressure sensor 180C is configured to measure barometric pressure. The magnetic sensor 180D includes a Hall sensor. The acceleration sensor 180E may detect accelerations in various directions (usually on three axes) of the electronic device 100. The distance sensor 180F is configured to measure a distance. The optical proximity sensor 180G may include, for example, a light-emitting diode (LED) and an optical detector, for example, a photodiode. The ambient light sensor 180L is configured to sense ambient light brightness. The fingerprint sensor 180H is configured to collect a fingerprint. The temperature sensor 180J is configured to detect a temperature. The touch sensor 180K is also referred to as a "touch panel". The touch sensor 180K may be disposed in the display 194, and the touch sensor 180K and the display 194 form a touchscreen, which is also referred to as a "touchscreen". The touch sensor 180K is configured to detect a touch operation performed on or near the touch sensor. The touch sensor may transfer the detected touch operation to the application processor to determine a type of a touch event. A visual output related to the touch operation may be provided through the display 194. In some other embodiments, the touch sensor 180K may alternatively be disposed on a surface of the electronic device 100 at a location different from that of the display 194. The bone conduction sensor 180M may obtain a vibration signal. The motor 191 may generate a vibration prompt. The indicator 192 may be an indicator light, and may be configured to indicate a charging state and a power change, or may be configured to indicate a message, a missed call, a notification, and the like.

The button 190 includes a power button, a volume button, and the like. In some examples, the power button may be configured to trigger the electronic device 100 to switch to a to-be-activated NFC emulation card. In some other examples, the volume button may be configured to trigger the electronic device 100 to switch to a to-be-activated NFC emulation card. For details, refer to the embodiment shown in FIG. 3A.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be simultaneously inserted into a same SIM card interface 195. The plurality of cards may be of a same type or different types. The SIM card interface 195 may also be compatible with different types of SIM cards. The SIM card interface 195 may also be compatible with an external memory card. The electronic device 100 interacts with a network through the SIM card, to implement functions such as calling and data communication. In some embodiments, the electronic device 100 uses an eSIM, that is, an embedded SIM card. The eSIM card may be embedded into the electronic device 100, and cannot be separated from the electronic device 100.

In some embodiments, the wireless communication module 160 may be specifically configured to establish a short-range wireless communication link with an NFC card reading device 200, so that the wireless communication module and the NFC card reading device perform short-range wireless data transmission with each other. For example, the short-range wireless communication link may be a Bluetooth link, a Wi-Fi link, or an NFC link. Therefore, the wireless communication module 160 may specifically include a Bluetooth communication module, a Wi-Fi communication module, or an NFC module. The NFC module may include any appropriate component configured to implement proximity-based non-contact communication between the electronic device 100 and the NFC card reading device 200, so as to provide an NFC function for the electronic device 100. For descriptions of the NFC module, refer to the embodiment shown in FIG. 3A. Details are not described herein again.

The foregoing content describes in detail the method provided in this application. To better implement the foregoing solutions in embodiments of this application, embodiments of this application further provide a corresponding apparatus or device.

In embodiments of this application, the electronic device 100 and the NFC card reading device 200 may be divided into functional modules based on the foregoing method examples, for example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example, and is merely logic function division. In actual implementation, there may be another division manner.

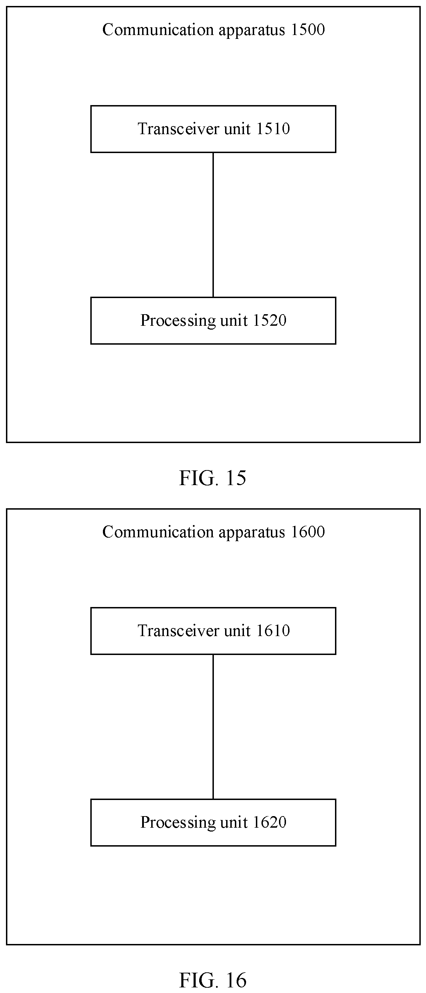

The following describes in detail communication apparatuses in embodiments of this application with reference to FIG. 15 to FIG. 18.

When an integrated unit is used, refer to FIG. 15. FIG. 15 is a diagram of a structure of a communication apparatus 1500 according to an embodiment of this application. The communication apparatus 1500 may be the electronic device 100 or the NFC tag card in the foregoing embodiments. Optionally, the communication apparatus 1500 may be a chip/chip system, for example, an NFC chip. As shown in FIG. 15, the communication apparatus 1500 may include a transceiver unit 1510 and a processing unit 1520.

The transceiver unit 1510 may be further configured to perform function steps related to NFC sending and NFC receiving performed by the electronic device 100 in the foregoing embodiments of this application.

Optionally, the processing unit 1520 may be further configured to perform function steps related to NFC protocol parsing and encapsulation, an NFC service processing procedure, displaying, and the like performed by the electronic device 100 in the foregoing embodiments of this application.

It should be understood that the communication apparatus 1500 in this design may correspondingly perform method steps performed by the electronic device 100 in the foregoing embodiments. For brevity, details are not described herein again.

When an integrated unit is used, refer to FIG. 16. FIG. 16 is a diagram of a structure of a communication apparatus 1600 according to an embodiment of this application. The communication apparatus 1600 may be the NFC card reading device 200 in the foregoing embodiments. As shown in FIG. 16, the communication apparatus 1600 may include a transceiver unit 1610 and a processing unit 1620.

Optionally, the transceiver unit 1610 may be further configured to perform function steps related to NFC sending and NFC receiving performed by the NFC card reading device 200 in the foregoing embodiments of this application.

Optionally, the processing unit 1620 may be further configured to perform function steps related to NFC protocol parsing and encapsulation and an NFC service processing procedure performed by the NFC card reading device 200 in the foregoing embodiments of this application.

It should be understood that the communication apparatus 1600 in this design may correspondingly perform method steps performed by the NFC card reading device 200 in the foregoing embodiments. For brevity, details are not described herein again.

The electronic device 100 and the NFC card reading device 200 in embodiments of this application are described above. It should be understood that any product in any form that has a function of the electronic device 100 in FIG. 15 and any product in any form that has a function of the NFC card reading device 200 in FIG. 16 fall within the protection scope of embodiments of this application.

In a possible product form, the electronic device 100 in embodiments of this application may be implemented by using a general bus architecture.

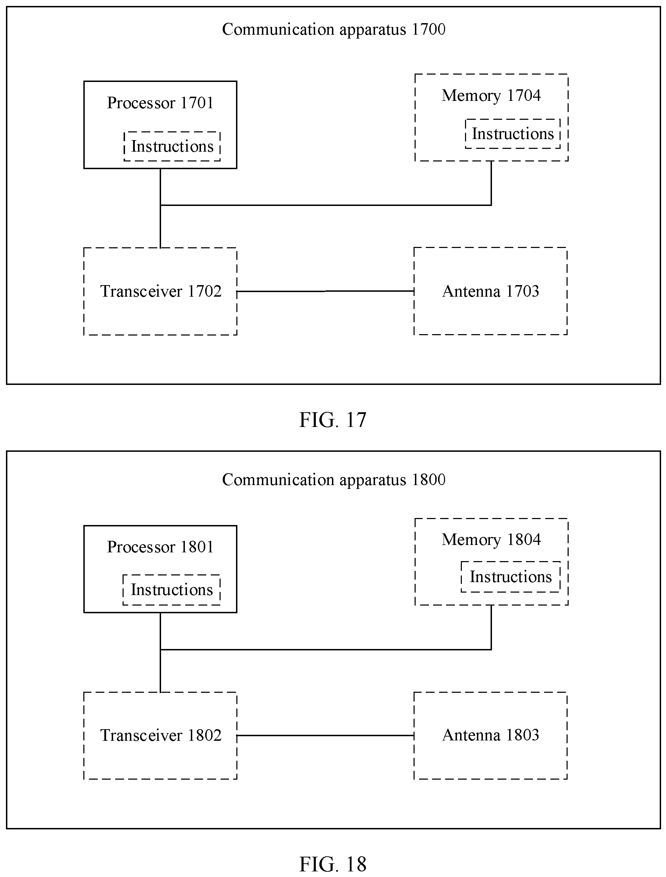

FIG. 17 is a diagram of a structure of a communication apparatus 1700 according to an embodiment of this application. The communication apparatus 1700 may be an electronic device 100, or an NFC tag card, or an apparatus in the electronic device 100, or an apparatus in the NFC tag card. As shown in FIG. 17, the communication apparatus 1700 includes a processor 1701 and a transceiver 1702 that is internally connected to and communicates with the processor 1701. The processor 1701 may be a general-purpose processor, a dedicated processor, or the like. For example, the processor may be a central processing unit and/or an NFC controller. The transceiver 1702 may be referred to as a transceiver unit, a transceiver machine, a transceiver circuit, or the like, and is configured to implement a transceiver function. The transceiver 1702 may include a receiver and a transmitter. The receiver may be referred to as a receiver machine, a receiver circuit, or the like, and is configured to implement a receiving function, for example, an NFC receiving function. The transmitter may be referred to as a transmitter machine, a transmitter circuit, or the like, and is configured to implement a sending function, for example, an NFC sending function. Optionally, the communication apparatus 1700 may further include an antenna 1703 and/or a radio frequency unit (not shown in FIG. 17), for example, an NFC antenna. The NFC antenna may be an antenna in a coil form. The antenna 1703 and/or the radio frequency unit may be located inside the communication apparatus 1700, or may be separated from the communication apparatus 1700, that is, the antenna 1703 and/or the radio frequency unit may be deployed remotely or deployed in a distributed manner.

Optionally, the communication apparatus 1700 may include one or more memories 1704. The memory may store instructions. The instructions may be a computer program. The computer program may be run on the communication apparatus 1700, so that the communication apparatus 1700 performs the method steps described in the foregoing embodiments of this application. Optionally, the memory 1704 may further store data. The communication apparatus 1700 and the memory 1704 may be separately disposed, or may be integrated together.

The processor 1701, the transceiver 1702, and the memory 1704 may be connected through a communication bus.

In a design, the communication apparatus 1700 may be configured to perform functions of the electronic device 100 in the foregoing embodiments. The processor 1701 may be configured to perform function steps related to NFC protocol parsing and encapsulation, an NFC service processing procedure, and displaying performed by the electronic device 100 in the foregoing embodiments of this application and/or another process used in the technology described in this specification. The transceiver 1702 may be configured to perform function steps related to NFC sending and NFC receiving performed by the electronic device 100 in the foregoing embodiments of this application and/or another processes used in the technology described in this specification.

In any one of the foregoing designs, the processor 1701 may include a transceiver configured to implement sending and receiving functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In any one of the foregoing designs, the processor 1701 may store instructions. The instructions may be a computer program. The computer program runs on the processor 1701, so that the communication apparatus 1700 can perform the method steps performed by the electronic device 100 in the foregoing embodiments of this application. The computer program may be built in the processor 1701. In this case, the processor 1701 may be implemented by hardware.

In an implementation, the communication apparatus 1700 may include a circuit. The circuit may implement a sending, receiving, or communication function in the foregoing method embodiment. The processor and the transceiver described in this application may be implemented on an integrated circuit (integrated circuit, IC), an analog IC, a radio frequency integrated circuit RFIC, a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an N-type metal oxide semiconductor (N-type metal oxide semiconductor, NMOS), a P-type metal oxide semiconductor (positive channel metal oxide semiconductor, PMOS), a bipolar junction transistor (bipolar junction transistor, BJT), a bipolar CMOS (BiCMOS), silicon germanium (SiGe), and gallium arsenide (GaAs).

A scope of the communication apparatus described in this application is not limited thereto, and a structure of the communication apparatus may not be limited in FIG. 17. The communication apparatus 1700 may be an independent device or may be a part of a large device. For example, the communication apparatus 1700 may be:
(1) an independent integrated circuit IC, a chip, a chip system, or a subsystem; (2) a set with one or more ICs, where optionally, the IC set may also include a storage component configured to store data and a computer program; (3) an ASIC, for example, an NFC chip; (4) a module that can be embedded in another device; (5) a receiver machine, a terminal, an intelligent terminal, a cellular phone, a wireless device, a handheld device, a mobile unit, a vehicle-mounted device, a network device, a cloud device, an artificial intelligence device, or the like; or (6) others.

In a possible product form, the NFC card reading device 200 in embodiments of this application may be implemented by using a general bus architecture.

FIG. 18 is a diagram of a structure of a communication apparatus 1800 according to an embodiment of this application. The communication apparatus 1800 may be the NFC card reading device 200 or an apparatus in the NFC card reading device. As shown in FIG. 18, the communication apparatus 1800 includes a processor 1801 and a transceiver 1802 that is internally connected to and communicates with the processor 1801. The processor 1801 may be a general-purpose processor, a dedicated processor, or the like, for example, may be an NFC controller. The transceiver 1802 may be referred to as a transceiver unit, a transceiver machine, a transceiver circuit, or the like, and is configured to implement a transceiver function. The transceiver 1802 may include a receiver and a transmitter. The receiver may be referred to as a receiver machine, a receiver circuit, or the like, and is configured to implement a receiving function. The transmitter may be referred to as a transmitter machine, a transmitter circuit, or the like, and is configured to implement a sending function. Optionally, the communication apparatus 1800 may further include an antenna 1803 and/or a radio frequency unit (not shown in the figure). The antenna 1803 and/or the radio frequency unit may be located inside the communication apparatus 1800, or may be separated from the communication apparatus 1800, that is, the antenna 1803 and/or the radio frequency unit may be deployed remotely or deployed in a distributed manner.

Optionally, the communication apparatus 1800 may include one or more memories 1804. The memory may store instructions. The instructions may be a computer program. The computer program may be run on the communication apparatus 1800, so that the communication apparatus 1800 performs the method steps described in the foregoing embodiments of this application. Optionally, the memory 1804 may further store data. The communication apparatus 1800 and the memory 1804 may be separately disposed, or may be integrated together.

The processor 1801, the transceiver 1802, and the memory 1804 may be connected through a communication bus.

In a design, the communication apparatus 1800 may be configured to perform functions of the NFC card reading device 200 in the foregoing embodiments. The processor 1801 may be configured to perform function steps related to NFC protocol parsing and encapsulation and an NFC service processing procedure performed by the NFC card reading device 200 in the foregoing embodiments and/or another process used in the technology described in this specification. The transceiver 1802 may be configured to perform function steps related to NFC sending and NFC receiving performed by the NFC card reading device 200 in the foregoing embodiments and/or another processes used in the technology described in this specification.

In any one of the foregoing designs, the processor 1801 may include a transceiver configured to implement sending and receiving functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In any one of the foregoing designs, the processor 1801 may store instructions. The instructions may be a computer program. The computer program runs on the processor 1801, so that the communication apparatus 1800 can perform the method steps performed by the NFC card reading device 200 in the foregoing method embodiments. The computer program may be built in the processor 1801. In this case, the processor 1801 may be implemented by hardware.

An embodiment of this application further provides a computer-readable storage medium. The computer-readable storage medium stores a computer program. When the computer program is executed by a processor, steps performed by the electronic device 100 in the foregoing method embodiments can be implemented.

An embodiment of this application further provides a computer-readable storage medium. The computer-readable storage medium stores a computer program. When the computer program is executed by a processor, steps performed by the NFC card reading device 200 in the foregoing method embodiments can be implemented.

An embodiment of this application further provides a computer program product, including a computing program. When the computer program runs on a computer, the computer is enabled to implement steps performed by the electronic device 100 in the foregoing method embodiments.

An embodiment of this application further provides a computer program product, including a computing program. When the computer program runs on a computer, the computer is enabled to implement steps performed by the NFC card reading device 200 in the foregoing method embodiments.

An embodiment of this application further provides a chip system. The chip system includes a processing circuit and an interface circuit. The interface circuit is configured to receive code instructions and transmit the code instructions to the processing circuit. The processing circuit is configured to run the code instructions, so that the chip system implements steps performed by the electronic device 100 in any one of the method embodiments of this application. The chip system may be a single chip or a chip module including a plurality of chips.

An embodiment of this application further provides a chip system. The chip system includes a processing circuit and an interface circuit. The interface circuit is configured to receive code instructions and transmit the code instructions to the processing circuit. The processing circuit is configured to run the code instructions, so that the chip system implements steps performed by the NFC card reading device 200 in any one of the method embodiments of this application. The chip system may be a single chip or a chip module including a plurality of chips.

In conclusion, the foregoing embodiments are merely intended for describing the technical solutions of this application other than limiting this application. Although this application is described in detail with reference to the foregoing embodiments, a person of ordinary skill in the art should understand that modifications may still be made to the technical solutions described in the foregoing embodiments or equivalent replacements may still be made to some technical features thereof, without departing from the scope of the technical solutions of embodiments of this application.

## Claims

1. A near field communication NFC emulation card switching method, applied to an electronic device, wherein the method comprises:
activating a first NFC emulation card;
powering off the electronic device;
after entering a radio frequency field of an NFC card reading device, executing a card swiping service of the first NFC emulation card with the NFC card reading device;
switching to and activating a second NFC emulation card when a specified switching condition is met; and
executing a card swiping service of the second NFC emulation card with the NFC card reading device.

2. The method according to claim 1, wherein switching to and activating the second NFC emulation card specifically comprise:
switching to and activating the second NFC emulation card based on a first card swiping set, wherein the first card swiping set comprises the second NFC emulation card.

3. The method according to claim 2, wherein the first card swiping set further comprises the first NFC emulation card.

4. The method according to claim 2 or 3, wherein the method further comprises:
receiving the input first card swiping set before the electronic device is powered off.

5. The method according to any one of claims 2 to 4, wherein there is a card swiping sequence between the first NFC emulation card and the second NFC emulation card in the first card swiping set.

6. The method according to claim 5, wherein switching to and activating the second NFC emulation card specifically comprise:
switching to and activating the second NFC emulation card in the card swiping sequence.

7. The method according to any one of claims 1 to 6, wherein the specified switching condition comprises receiving first input for a first button.

8. The method according to claim 7, wherein the first button is a power button.

9. The method according to any one of claims 1 to 6, wherein the specified switching condition comprises: detecting that the electronic device leaves the radio frequency field of the NFC card reading device and then re-enters the radio frequency field of the NFC card reading device.

10. The method according to any one of claims 1 to 6, wherein the specified switching condition comprises: after the card swiping service of the first NFC emulation card fails to be executed with the NFC card reading device, detecting that the electronic device leaves the radio frequency field of the NFC card reading device and then re-enters the radio frequency field of the NFC card reading device.

11. The method according to claim 9 or 10, wherein detecting that the electronic device leaves the radio frequency field of the NFC card reading device and then re-enters the radio frequency field of the NFC card reading device specifically comprises:
detecting that field strength of the radio frequency field of the NFC card reading device is less than first field strength, and then detecting that the field strength of the radio frequency field of the NFC card reading device is greater than second field strength.

12. The method according to claim 9 or 10, wherein detecting that the electronic device leaves the radio frequency field of the NFC card reading device and then re-enters the radio frequency field of the NFC card reading device specifically comprises:
detecting that field strength of the radio frequency field of the NFC card reading device is less than first field strength, and then receiving a card search request sent by the NFC card reading device.

13. The method according to any one of claims 1 to 6, wherein the specified switching condition comprises: detecting that a second moment arrives, wherein a time difference between the second moment and a first moment of entering the radio frequency field of the NFC card reading device is a first time difference.

14. The method according to claim 13, wherein after executing the card swiping service of the second NFC emulation card with the NFC card reading device, the method further comprises:
switching to and activating a third NFC emulation card at a third moment, wherein a time difference between the third moment and the second moment is the first time difference.

15. The method according to any one of claims 1 to 6, wherein the specified switching condition comprises: detecting that a second moment arrives after the card swiping service of the first NFC emulation card fails to be executed with the NFC card reading device, wherein a time difference between the second moment and a first moment of entering the radio frequency field of the NFC card reading device is a first time difference.

16. The method according to claim 15, wherein after executing the card swiping service of the second NFC emulation card with the NFC card reading device, the method further comprises:
if the card swiping service of the second NFC emulation card fails to be executed with the NFC card reading device, switching to and activating a third NFC emulation card at a third moment, wherein a time difference between the third moment and the second moment is the first time difference.

17. The method according to any one of claims 1 to 16, wherein switching to and activating the second NFC emulation card when the specified switching condition is met specifically comprise:
within first duration since the moment of entering the radio frequency field of the NFC card reading device, switching to and activating the second NFC emulation card when the specified switching condition is met.

18. An electronic device, comprising a processor, an NFC module, and a storage module, wherein
the storage module activates a first NFC emulation card;
the processor controls the electronic device to be powered off;
after the electronic device enters a radio frequency field of an NFC card reading device, the NFC module executes a card swiping service of the first NFC emulation card with the NFC card reading device;
the storage module switches to and activates a second NFC emulation card when a specified switching condition is met; and
the NFC module executes a card swiping service of the second NFC emulation card with the NFC card reading device.

19. The electronic device according to claim 18, wherein the electronic device further comprises a power module;
that the processor controls the electronic device to be powered off specifically comprises:
the processor sends a power-off instruction to the power module; and
in response to the power-off instruction, the power module stops supplying power to the processor, and supplies power to the NFC module and the storage module.

20. The electronic device according to claim 18 or 19, wherein that the storage module switches to and activates the second NFC emulation card specifically comprises:
the storage module switches to and activates the second NFC emulation card based on the first card swiping set, wherein the first card swiping set comprises the second NFC emulation card.

21. The electronic device according to claim 20, wherein the first card swiping set further comprises the first NFC emulation card.

22. The electronic device according to claim 20 or 21, wherein the processor sends the first card swiping set to the storage module when detecting a power-off condition.

23. The electronic device according to any one of claims 20 to 22, wherein there is a card swiping sequence between the first NFC emulation card and the second NFC emulation card in the first card swiping set.

24. The method according to claim 23, wherein that the storage module switches to and activates the second NFC emulation card specifically comprises:
the storage module switches to and activates the second NFC emulation card in the card swiping sequence.

25. The electronic device according to any one of claims 18 to 24, wherein the electronic device further comprises a button module, wherein
that the storage module switches to and activates the second NFC emulation card when the specified switching condition is met specifically comprises:
the button module receives first input for a first button;
the button module sends a first card switching instruction to the storage module in response to the first input; and
the storage module switches to and activates the second NFC emulation card in response to the first card switching instruction.

26. The electronic device according to any one of claims 18 to 24, wherein that the storage module switches to and activates the second NFC emulation card when the specified switching condition is met specifically comprises:
the NFC module detects that the electronic device leaves the radio frequency field of the NFC card reading device and then re-enters the radio frequency field of the NFC card reading device, and sends a first card switching instruction to the storage module; and
the storage module switches to and activates the second NFC emulation card in response to the first card switching instruction.

27. The electronic device according to any one of claims 18 to 24, wherein that the storage module switches to and activates the second NFC emulation card when the specified switching condition is met specifically comprises:
after failing to execute the card swiping service based on the first NFC emulation card with the NFC card reading device, the NFC module detects that the electronic device leaves the radio frequency field of the NFC card reading device and then re-enters the radio frequency field of the NFC card reading device, and sends a first card switching instruction to the storage module; and
the storage module switches to and activates the second NFC emulation card in response to the first card switching instruction.

28. The electronic device according to claim 26 or 27, wherein that the NFC module detects that the electronic device leaves the radio frequency field of the NFC card reading device and then re-enters the radio frequency field of the NFC card reading device specifically comprises:
the NFC module detects that field strength of the radio frequency field of the NFC card reading device is less than first field strength, and then detects that the field strength of the radio frequency field of the NFC card reading device is greater than second field strength.

29. The electronic device according to claim 26 or 27, wherein that the NFC module detects that the electronic device leaves the radio frequency field of the NFC card reading device and then re-enters the radio frequency field of the NFC card reading device specifically comprises:
the NFC module detects that field strength of the radio frequency field of the NFC card reading device is less than first field strength, and then receives a card search request sent by the NFC card reading device.

30. The electronic device according to any one of claims 18 to 24, wherein that the storage module switches to and activates the second NFC emulation card when the specified switching condition is met specifically comprises:
the storage module switches to and activates the second NFC emulation card at a second moment, wherein a time difference between the second moment and a first moment of entering the radio frequency field of the NFC card reading device is a first time difference.

31. The electronic device according to claim 30, wherein the storage module activates a third NFC emulation card at a third moment, wherein a time difference between the third moment and the second moment is the first time difference.

32. The electronic device according to any one of claims 18 to 24, wherein that the storage module switches to and activates the second NFC emulation card when the specified switching condition is met specifically comprises:
after failing to execute the card swiping service of the first NFC emulation card with the NFC card reading device, the NFC module sends a first card switching instruction to the storage module; and
the storage module switches to and activates the second NFC emulation card at a second moment in response to the first card switching instruction, wherein a time difference between the second moment and a first moment of entering the radio frequency field of the NFC card reading device is a first time difference.

33. The electronic device according to claim 32, wherein after failing to execute the card swiping service of the second NFC emulation card with the NFC card reading device, the NFC module sends a second card switching instruction to the storage module; and
the storage module switches to and activates a third NFC emulation card at a third moment in response to the second card switching instruction, wherein a time difference between the third moment and the second moment is the first time difference.

34. The electronic device according to any one of claims 30 to 33, wherein the storage module receives, before the second moment, the first moment sent by the NFC module.

35. The electronic device according to any one of claims 18 to 34, wherein that the storage module activates the first NFC emulation card specifically comprises: the storage module sends an access layer parameter of the first NFC emulation card to the NFC module.

36. The electronic device according to claim 35, wherein the access layer parameter of the first NFC emulation card comprises a unique identifier UID of the first NFC emulation card;
before executing the card swiping service of the first NFC emulation card with the NFC card reading device, the NFC module receives a select select command sent by the NFC card reading device; and
the NFC module sends the UID of the first NFC emulation card to the NFC card reading device after receiving the select command, wherein the UID is used by the NFC card reading device to execute the card swiping service of the first NFC emulation card.

37. The electronic device according to any one of claims 18 to 35, wherein before executing the card swiping service of the first NFC emulation card with the NFC card reading device, the NFC module receives a card data request sent by the NFC card reading device;
the NFC module sends an obtaining request to the storage module after receiving the card data request;
the storage module sends card information of the first NFC emulation card to the NFC module after receiving the obtaining request; and
the NFC module sends a card data response to the NFC card reading device, wherein the card data response comprises the card information of the first NFC emulation card, and the card information of the first NFC emulation card is used by the NFC card reading device to execute the card swiping service of the first NFC emulation card.

38. An electronic device, comprising one or more processors, one or more memories, and a transceiver, wherein the transceiver, the one or more memories, and the one or more processors are coupled to each other, the one or more memories are configured to store a computer program, and when the one or more processors execute the computer program, the near field communication emulation card switching method according to any one of claims 1 to 17 is performed.

39. A computer-readable storage medium, wherein the computer-readable storage medium stores a computer program, and when the computer program is executed by a processor, the near field communication emulation card method according to any one of claims 1 to 17 is implemented.

40. A computer program product, comprising a computer program, wherein when the computer program is executed by a processor, the near field communication emulation card method according to any one of claims 1 to 17 is implemented.

41. A chip system, comprising a processing circuit and an interface circuit, wherein the interface circuit is configured to receive code instructions and transmit the code instructions to the processing circuit, and the processing circuit is configured to run the code instructions to perform the near field communication emulation card method according to any one of claims 1 to 17.
